# EUROPEAN PATENT APPLICATION

(11) **EP 0 992 983 A2**
(43) Date of publication of application: **12.04.2000**
(21) Application number: 99119852.4
(22) Date of filing: 07.10.1999
(51) Int. Cl.: G11B 5/00, G11B 23/00

(54) **Data read and write apparatus**

(30) Priority: 08.10.1998 JP 28700598
(71) Applicant: Mitsumi Electric Company Ltd., Chofu-shi Tokyo (JP); Smartdisk International Inc., Naples, FL 34104 (US); YAMAICHI ELECTRONICS CO., LTD., Ohta-ku, Tokyo (JP)
(72) Inventor: Higashi, Yoshitaka, c/o Tendo Factory, Tendo-shi, Yamagata (JP); Seno, Koichi, c/o Tendo Factory, Tendo-shi, Yamagata (JP); Komatsu, Hisateru, c/o Tendo Factory, Tendo-shi, Yamagata (JP); Yajima, Toshio, , (JP); Ito, Toshiyasu, Tokyo (JP)
(74) Representative: Patentanwälte Dr. Solf & Zapf

(57) **Abstract**

A data read/write apparatus is adapted to selectively use at least one of a diskette and a diskette-type adapter therein. The data read/write apparatus has functions and a structure for driving a 3.5 inch floppy disk and an existing diskette-type adapter by means of a magnetic head. In addition, the data read/write apparatus is provided with a connector for enabling to drive improved diskette-type adapters having power reception terminals and signal terminals. The connector has power supply terminals for supplying power to the power reception terminals of the diskette-type adapter from the data read/write apparatus, and signal terminals for enabling transmission and reception of digital signals between the data read/write apparatus and the diskette-type adapter. The data read/write apparatus supplies the power to the diskette-type adapter through the power supply terminals and the power reception terminals when such a diskette-type adapter is loaded. When the loaded diskette-type adapter has the signal terminals, the data read/write apparatus can transmit digital data to and receive digital data from the diskette-type adapter. There is no need to provide the diskette-type adapter with a battery, since the power is supplied from the data read/write apparatus.

## Description

### BACKGROUND OF THE INVENTION

### Field of the invention

The present invention relates to a data read and write apparatus (information read/write apparatus), and in particular relates to a data read and write apparatus which can not only read out data from and write data on a magnetic disk in a diskette (floppy disc), but also drive a diskette-type adapter with an IC memory, in which a power supply means is provided to make it possible to supply power to the diskette-type adapter.

### Description of the Prior Art

In the technical field related to digital cameras and the like, IC memory cards such as a SSFDC (Solid State Floppy Disk Card) are used as a data storage for storing large-capacity data such as graphics data and the like. Further, with the spread of electronic commerce and electronic banking in recent years, IC memory cards are becoming the standard data storage for storing personal data.

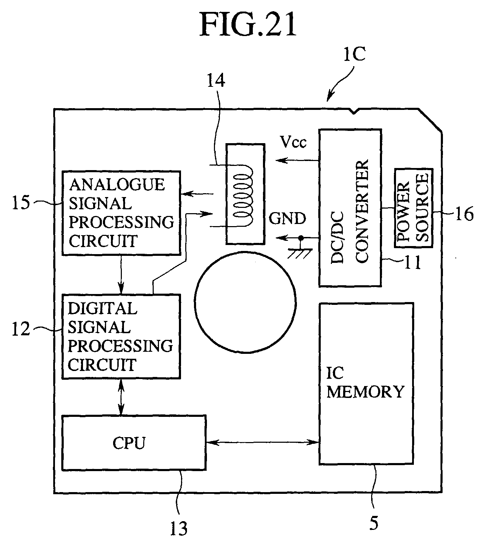

Now, in response to the spread of such IC memory cards, the diskette-type adapter 1C shown in Fig. 21 has been used as a device for reading out data from and writing data in an IC memory.

In this regard, Fig. 21 is a block diagram showing an internal structure of a prior art diskette-type adapter 1C, which shows a state that an IC memory card is inserted. Hereinbelow, the structure of the diskette-type adapter 1C will be described with reference to Fig. 21.

As shown in Fig. 21, the diskette-type adapter 1C is mainly equipped with a cartridge-shaped outer case having roughly the same dimensions as a 3.5 inch type floppy disk (hereinafter referred to as "diskette"); a magnetic coil 14 which is used to transmit data to and receive data from the magnetic head of a disk drive; an analog signal processing circuit 15; a digital signal processing circuit 12; a central processing unit (CPU) 13; a power supply 16 for supplying power to drive the diskette-type adapter 1C; and a DC/DC converter 11 for stabilizing the output voltage (Vcc) supplied from the power supply 16.

In particular, the diskette-type adapter 1C is adapted for use in a floppy disk drive (hereinafter referred to as a FDD) provided in a computer or other systems. Further, the diskette-type adapter 1C is designed to make it possible to removably insert a card-type IC memory 5 thereinto. In this regard, the IC memory 5 includes a RAM (Random Access Memory).

When the diskette-type adapter 1C with the IC memory 5 is loaded into a FDD, the FDD can read out data from and write data in the IC memory 5 via the diskette-type adapter 1C. In this way, by using the IC memory 5 as a data storage, a relatively large amount of data can be stored in comparison with a 3.5 inch type diskette and the like.

In this regard, in order to read out data from and write data in the IC memory in the diskette-type adapter 1C, the signals transmitted from the FDD and the signals to be transmitted to the FDD have to be appropriately processed in the diskette-type adapter 1C. Further, in order to process signals in the diskette-type adapter 1C, it is necessary to supply power to the various electrical components provided in the diskette-type adapter 1C.

For this reason, with regard to the prior art diskette-type adapter 1C, a coin-shaped thin battery such as CR2016 or CR2025 is used as a power source.

However, the capacity of the coin-type battery is not large enough to make it possible to drive the diskette-type adapter 1C over a long period of time. Accordingly, the battery must be frequently replaced in order to prevent the battery from being exhausted when the diskette-type adapter 1C is being driven.

Further, in the casewhere a large recording capacity IC memory is used for the transfer of large-capacity data such as graphic data between the diskette-type adapter 1C and a computer, there is the risk that the battery will be exhausted during the driving of the diskette-type adapter 1C.

### SUMMARY OF THE INVENTION

It is therefore an object of the present invention to provide an improved data read and write apparatus which can not only read out data from and write data on a magnetic disk in a diskette, but also transmit data to and receive data from a diskette-type adapter with an IC memory as well as supply power to the diskette-type adapter.

In order to achieve the above object, the present invention is directed to a data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having digital signal transmission and reception means and/or analog signal transmission and reception means and having a power reception portion through which power is supplied from the data read/write apparatus. The data read/write apparatus comprises digital signal transmission and reception means for transmitting and receiving a digital signal to and from the digital signal transmission and reception means of the diskette-type adapter when the diskette-type adapter having the digital signal transmission and reception means is loaded in the data read/write apparatus; analog signal transmission and reception means for reading out data from and writing data on the magnetic disk of the diskette when the diskette is loaded in the data read/write apparatus, and for transmitting and receiving an analog signal to and from the analog signal transmission and reception means of the diskette-type adapter when the diskette-type adapter having only the analog signal transmission and reception means is loaded in the data read/write apparatus; and power supply means for supplying the power to the diskette-type adapter through the power reception portion of the diskette-type adapter when the diskette-type adapter having the power reception portion is loaded in the data read/write apparatus.

According to the data read/write apparatus of the present invention, it is possible to read and write data from and to diskette-type adapter having the power reception portion, in addition to widely used 3.5 inch diskettes, thus making it possible to provide the data read/write apparatus which can be used with various storage media. Further, this data read/write apparatus can be manufactured easily only by providing the existing FDD with the power supply means such as terminals which correspond to the power reception portion of the diskette-type adapter.

It is preferred that the data read/write apparatus further comprises discrimination means for discriminating a loaded object as the diskette-type adapter when it is loaded in the data read/write apparatus. Preferably, the discrimination means is constructed so as to be able to discriminate that either of the digital signal transmission and reception means or the analog signal transmission and reception means is provided in the loaded diskette-type adapter. By providing such a discrimination means, it becomes possible to discriminate the type of the loaded diskette-type adapter automatically. Preferably, the discrimination by the discrimination means is made based on discrimination information transmitted from the diskette-type adapter. Alternatively, the data read/write apparatus is provided with a switching mechanism being configured to generate discrimination information when the diskette-type adapter is loaded in the data read/write apparatus, in which the discrimination by the discrimination means is made based on the discrimination information generated by the switching mechanism.

In the present invention, it is also preferred that the data read/write apparatus further comprises switching means for switching an operation mode of the apparatus between a first mode where the analog signal transmission and reception means can be operated and a second mode where the digital signal transmission and reception means can be operated, in response to the discrimination result by the discrimination means.

In this case, it is preferred that the switching means switches the operation mode of the apparatus from the first mode to the second mode when the discrimination means discriminates a loaded object as the diskette-type adapter having the digital signal transmission and reception means.

Another aspect of the present invention is directed to a data read/write apparatus in which at least one of a first diskette-type device, a second diskette-type device and a third diskette-type is adapted to be selectively used, wherein the first diskette-type device including a magnetic disk therein as a data storage, the second diskette-type device being equipped with a built-in IC memory as a data storage or used with an IC memory as a data storage which is adapted to be removably inserted thereinto, and the second diskette-type device having digital signal transmission and reception means and having a power reception portion through which power is supplied from the data read/write apparatus, and the third diskette-type device being equipped with a built-in IC memory as a data storage or used with an IC memory as a data storage which is adapted to be removably inserted thereinto, and the third diskette-type device having analog signal transmission and reception means and having a power reception portion through which power is supplied from the data read/write apparatus. The apparatus comprises digital signal transmission and reception means for transmitting and receiving a digital signal to and from the digital signal transmission and reception means of the second diskette-type device when the second diskette-type device is loaded in the data read/write apparatus; analog signal transmission and reception means for reading out data from and writing data on the magnetic disk of the first diskette-type device when the first diskette-type device is loaded in the data read/write apparatus, and for transmitting and receiving an analog signal to and from the analog signal transmission and reception means of the third diskette-type device when the third diskette-type device is loaded in the data read/write apparatus; and power supply means for supplying the power to the second or third diskette-type device through the power reception portion of the diskette-type device when either one of the second and third diskette-type device is loaded in the data read/write apparatus.

In this case, it is preferred that the data read/write apparatus further comprises discrimination means for discriminating a loaded device between the second diskette-type device and the third diskette-type device when either one of the second or third diskette-type device is loaded.

Other aspect of the present invention is directed to a data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having a power reception portion through which power is supplied from the data read/write apparatus. The apparatus comprises discrimination means for discriminating a loaded object as the diskette-type adapter when it is loaded in the data read/write apparatus; and power supply means for supplying the power to the diskette-type adapter through the power reception portion of the diskette-type adapter when the discrimination means discriminates the loaded object as the diskette-type adapter.

In this case, it is preferred that the data read/write apparatus further comprises a holder which is displaceable between an eject position and a read and write position, wherein the power supply means supplies the power to the diskette-type adapter through the power reception portion of the diskette-type adapter when the holder into which the diskette-type adapter is inserted is displaced to the read and write position from the eject position.

Preferably, the power reception portion is arranged on the lower surface of the diskette-type adapter, in which the power supply means is arranged below the holder and comes into electrical contact with the power reception portion of the diskette-type adapter when the holder into which the diskette-type adapter is inserted is displaced to the read and write position from the eject position.

Alternatively, in the case where the power reception portion is arranged on the upper surface of the diskette-type adapter, the power supply means may be constructed so as to be displaceable between a connected position where the power supply means comes into electrical contact with the power reception portion and an unconnected position where the power supply means is separated from the power reception portion in accordance with the displacement of the holder between the read and write position and the eject position.

Further, it is also preferred that the holder is formed to expose the power reception portion of the diskette-type adapter when it is inserted into the holder, and the power supply means supplies the power to the diskette-type adapter through the exposed power reception portion when the holder into which the diskette-type adapter is inserted is displaced to the read and write position from the eject position.

The other aspect of the present invention is directed a data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having a power reception portion through which power is supplied from the data read/write apparatus. The apparatus comprises a holder which is configured to be able to hold each of the diskette and the diskette-type adapter, the holder being displaceable between an eject position and a read and write position; and power supply means for supplying the power to the diskette-type adapter through the power reception portion of the diskette-type adapter when the diskette-type adapter is inserted into the holder, the power supply means being provided in the holder.

Yet other aspect is directed to a data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having a power reception portion through which power is supplied from the data read/write apparatus. The apparatus comprises a holder which is configured to be able to hold each of the diskette and the diskette-type adapter, the holder being displaceable between an eject position and a read and write position; and power supply means for supplying the power to the diskette-type adapter through the power reception portion of the diskette-type adapter when the diskette-type adapter is inserted into the holder, wherein the power supply means supplies the power to the diskette-type adapter when the holder into which the diskette-type adapter is inserted is displaced to the read and write position from the eject position.

The described and other objects, structures and advantages of the present invention will be apparent when the following description of the preferred embodiment will be considered in conjunction with the appended drawings.

### BRIEF DESCRIPTION OF THE DRAWINGS

Figs. 1(A) and 1(B) are perspective views showing a first diskette-type adapter which can be used in a data read/write apparatus according to the present invention, in which different two types of IC memory card are used, respectively;
Fig. 2 shows the detailed structure of the first diskette-type adapter shown in Fig. 1, in which Fig. 2(A) is a block diagram showing the internal structure of the first diskette-type adapter, and Fig. 2(B) is a bottom view of the first diskette-type adapter;
Fig. 3 is a block diagram which shows the data read/write system including the data read/write apparatus according to the present invention in which the first diskette-type adapter is used;
Fig. 4 is a block diagram showing the data read/write apparatus according to the present invention in a state that the first diskette-type adapter has been loaded into the data read/write apparatus;
Fig. 5 is a block diagram showing the data read/write apparatus according to the present invention in a state that a different type of the first diskette-type adapter has been loaded into the data read/write apparatus;
Fig. 6 shows a detailed structure of a second diskette-type adapter, in which Fig. 6(A) is a block diagram showing an internal structure of the second diskette-type adapter, and Fig. 6(B) is a bottom view of the second diskette-type adapter;
Fig. 7 is a block diagram showing a data read/write system which uses the data read/write apparatus according to the present invention in which the second diskette-type adapter is used;
Fig. 8 is a block diagram showing the data read/write apparatus according to the present invention in a state that the second diskette-type adapter has been loaded in the data read/write apparatus;
Fig. 9 is a block diagram showing the data read/write apparatus according to the present invention in a state that the second diskette-type adapter has been loaded into the data read/write apparatus;
Fig. 10 is a block diagram showing a data read/write system which uses the data read/write apparatus according to the present invention in which a third diskette-type adapter is used;
Fig. 11 is a block diagram showing the data read/write system which uses the data read/write apparatus according to the present invention in which a 3.5 inch FD is used;
Fig. 12 is a perspective view of a floppy disk drive, which shows a state that an upper cover of the floppy disk drive is removed;
Fig. 13 is a perspective view showing main elements of the floppy disk drive;
Fig. 14 is side views showing an eject plate and a disk holder of the floppy disk drive, in which Fig. 14(A) shows a state that the disk holder is in an eject position (raised position) and Fig. 14(B) shows a state that the disk holder is in a read/write position (lowered position);
Fig. 15 is a perspective view showing a first embodiment of the data read/write apparatus according to the present invention;
Fig. 16 is an upper view showing a connector and a flexible printed circuit connected to the connector of the first embodiment of the data read/write apparatus according to the present invention;
Fig. 17 is side views showing an eject plate, a disk holder and the connector of the first embodiment of the data read/write apparatus, in which Fig. 17(A) shows a state that the disk holder is in an eject position (raised position) and Fig. 17(B) shows a state that the disk holder is in a read/write position (lowered position);
Fig. 18 is a perspective view showing a second embodiment of the data read/write apparatus according to the present invention;
Fig. 19 is a bottom view showing a connector and a flexible printed circuit connected to the connector of the second embodiment of the data read/write apparatus according to the present invention;
Fig. 20 is a side view showing an eject plate, a disk holder and the connector of the second embodiment of the data read/write apparatus according to the present invention, in which Fig. 20(A) shows a state that the disk holder is in an eject position (raised position) and Fig. 20(B) shows a state that the disk holder is in a read/write position (lowered position); and
Fig. 21 is a block diagram showing an internal structure of a prior art diskette-type adapter, which shows a state that an IC memory card has been inserted.

### DETAILED DESCRIPTION OF THE PREFERRED EMBODIMENTS

The preferred embodiments of a data read/write apparatus according to the present invention will be described below with reference to the appended drawings.

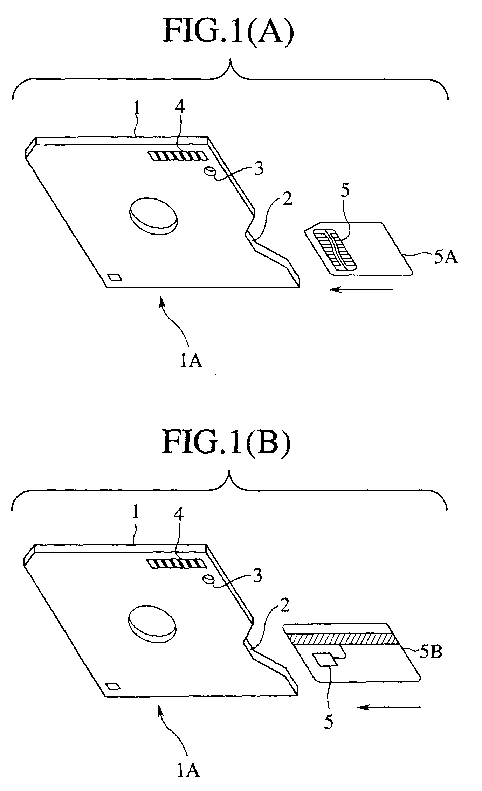

In this connection, Figs. 1(A) and 1(B) are perspective views showing a first diskette-type adapter 1A which can be used in the data read/write apparatus according to the present invention, in which different two types of IC memory card 5A, 5B are used, respectively. Next, with reference to Figs. 1(A) and 1(B), the structure of the first diskette-type adapter 1A used in the data read/write apparatus according to the present invention will be described below.

The first diskette-type adapter 1A shown in Figs. 1(A) and 1(B) is the newest type diskette-type adapter. The main feature of this first diskette-type adapter 1A resides in the provision of a terminal portion 4 which includes digital signal transmission/reception terminals (digital signal transmission/reception means) and power reception terminals (power reception portion).

The first diskette-type adapter 1A is mainly constructed from an outer case 1 having roughly the same dimensions as a 3.5 inch type diskette; an insertion port 2 through which an IC memory card is inserted; an opening 3 which is used by the data read/write apparatus for recognition or positioning of the first diskette-type adapter 1A; the terminal portion 4 described above (3.5 inch floppy disk / 3.5 inch FD); and various electronic components mounted inside the outer case 1.

The first diskette-type adapter 1A is constructed so as to make it possible to removably insert (load) one of the IC memory cards 5A and 5B thereto. The IC memory cards 5A and 5B are equipped with an IC memory 5 which serves as a data storage. In this connection, it to be noted that the data read/write apparatus according to the present invention can read out data from and write data in the IC memory of the IC memory card via the first diskette-type adapter 1A.

At this point, it should be mentioned that the structure of the first diskette-type adapter 1A is not limited to the embodiments shown in Figs. 1(A) and 1(B). For example, the first diskette-type adapter 1A may be configured as a diskette-type adapter with a built-in IC memory 5.

Now, when the first diskette-type adapter 1A is loaded into the data read/write apparatus, the data read/write apparatus carries out a recognition process to determine whether or not the object loaded in the data read/write apparatus is the first diskette-type adapter 1A. This recognition process is carried out by a discrimination means (described later). Further, as will be described later, the process for recognizing the first diskette-type adapter 1A performed in the data read/write apparatus is carried out using either the terminal portion 4 or the opening 3.

The terminal portion 4 includes seven terminals provided on the front left side portion of the lower surface (bottom surface) of the first diskette-type adapter 1A. These terminals are arranged in a row along the side edge of the front portion of the first diskette-type adapter 1A.

The seven terminals of the terminal portion 4 are used to transmit and receive digital signals, receive power, and output a discrimination signal (described later) from the first diskette-type adapter 1A to the data read/write apparatus. In this regard, when the first diskette-type adapter 1A is loaded into the data read/write apparatus, the terminal portion 4 comes into electrical contact with a terminal portion provided in the data read/write apparatus.

The opening 3 is formed at a place adjacent to the terminal portion 4 to have a predetermined depth. In accordance with the depth of the opening 3, the data read/write apparatus discriminates the type of the loaded body (e.g., a diskette-type adapter, a diskette, or other data storage). In this regard, each of diskette-type adapters to be loaded into the data read/write apparatus is equipped with an opening 3 having a depth which corresponds to its type.

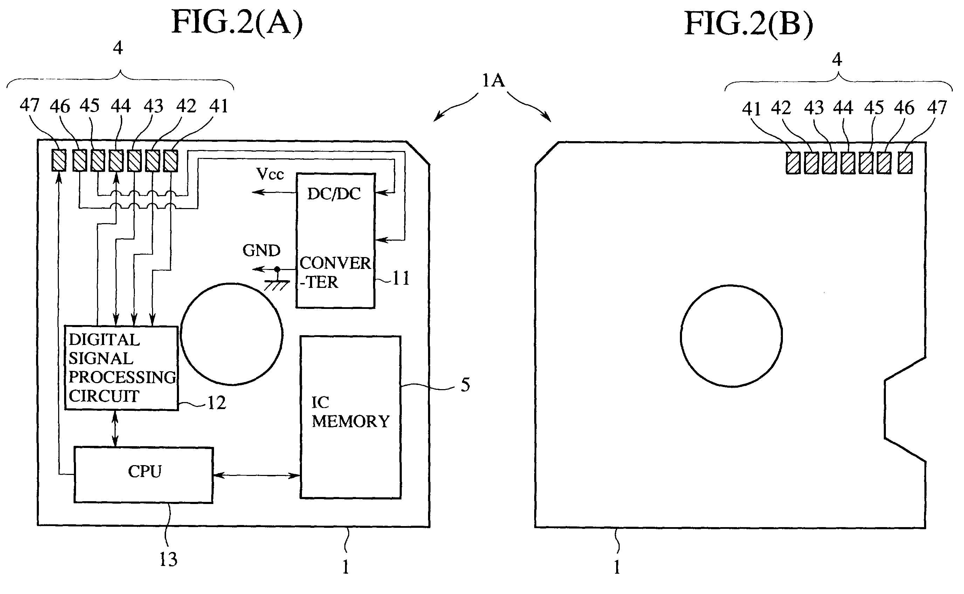

Fig. 2 shows the detailed structure of the first diskette-type adapter 1A shown in Fig. 1, in which Fig. 2(A) is a block diagram showing the internal structure of the first diskette-type adapter 1A, and Fig. 2(B) is a bottom view of the first diskette-type adapter 1A.

Next, with reference to Figs. 2(A) and 2(B), a description of the internal structure of the first diskette-type adapter 1A will be given below.

As shown in Fig. 2(A), the first diskette-type adapter 1A is provided with the terminal portion 4 and other electronic components such as a DC/DC converter 11 for obtaining a predetermined output voltage, a digital signal processing circuit 12 for processing digital signals, and a CPU 13 for controlling all operations of the first diskette-type adapter 1A and the like. Further, Fig. 2(A) shows the first diskette-type adapter 1A in a state that the IC memory card 5 has been inserted.

The terminal portion 4 is equipped with four terminals which act as the digital signal transmission/reception means of the present invention. Namely, the terminal portion 4 is equipped with a D/S terminal 41 for a DRIVE SELECT (D/S) signal, a W/D terminal 42 for a WRITE DATA (W/D) signal, a W/G terminal 43 for a WRITE GATE (W/G) signal, and an R/D terminal 44 for a READ DATA (R/D) signal.

Further, the terminal portion 4 is also equipped with a power reception portion including a power reception terminal 45 for receiving power and a GND terminal 46 for GND.

In addition, the terminal portion 4 is also equipped with a discrimination signal terminal 47 for outputting a discrimination signal to the data read/write apparatus. This discrimination signal is a signal indicating that the object loaded in the data read/write apparatus is the first diskette-type adapter 1A.

Now, when an electrical connection is established between the terminal portion 4 of the first diskette-type adapter 1A and a terminal portion (described later) provided in the data read/write apparatus, it becomes possible to carry out transmission and reception of digital signals between the first diskette-type adapter 1A and the data read/write apparatus. Further, such electrical connection makes it possible for the first diskette-type adapter 1A to be supplied with power from the data read/write apparatus. Furthermore, such electrical connection makes it possible for the data read/write apparatus to recognize that the loaded object is the first diskette-type adapter 1A.

In this regard, as shown in Fig. 2(B), the terminals 41 - 47 of the terminal portion 4 are arranged on the rear surface of the first diskette-type adapter 1A so as to be able to make contact with the terminal portion provided in the data read/write apparatus when the diskette-type adapter 1A is loaded in the data read/write apparatus.

The CPU 13 is electrically connected to both the digital signal processing circuit 12 and the IC memory 5, and all operations of the first diskette-type adapter 1A are controlled by the CPU 13. Further, when the first diskette-type adapter 1A is loaded in the data read/write apparatus, the CPU 13 transmits a discrimination signal to the data read/write apparatus via the discrimination signal terminal 47.

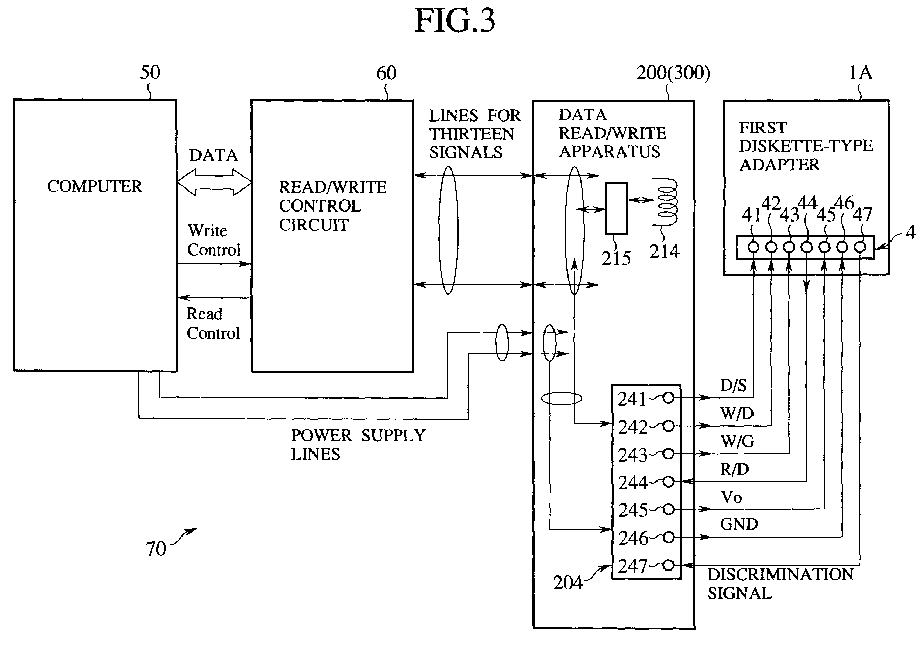

Next, Fig. 3 is a block diagram which shows a data read/write system 70 including the data read/write apparatus 200 (300) according to the present invention in which the first diskette-type adapter 1A is used. In this regard, Fig. 3 shows a state where the first diskette-type adapter 1A is loaded in the data read/write apparatus 200.

Now, with reference to Fig. 3, an overall structure of the data read/write system 70 which uses the data read/write apparatus 200 of the present invention will be given below.

The data read/write system 70 is roughly constricted from a computer 50, a read/write control circuit 60 provided in the computer 50, and the data read/write apparatus 200 (300) to be controlled by the read/write control circuit 60, and the first diskette-type adapter 1A which is driven by the data read/write apparatus 200.

The data read/write apparatus 200 includes an analog signal transmission/reception means which uses a magnetic head 214 to transmit and receive an analog signal, and a digital signal transmission/reception means which uses terminals 241 - 244 to transmit and receive a digital signal. In this regard, the data read/write apparatus 200 is designed to make it possible to selectively use either the analog signal transmission/reception means or the digital signal transmission/reception means. Further, switching (selection) between a first operation mode where the analog signal transmission/reception means is used and a second operation mode where the digital signal transmission/reception means is used is achieved by a switching means described later.

In this connection, Fig. 3 shows a state in which an operation mode (signal transmission/reception mode) has been switched from the first operation mode (analog signal transmission/reception mode) to the second operation mode (digital signal transmission/reception mode). This switching of the operation mode is carried out when the first diskette-type adapter 1A is loaded into the data read/write apparatus 200. Namely, the data read/write apparatus 200 switches the operation mode after receiving the discrimination signal transmitted from the first diskette-type adapter 1A via the terminal 47 of the first diskette-type adapter 1A and the terminal 247 of the data read/write apparatus 200.

In this regard, it is to be noted that the operation mode of the data read/write apparatus 200 is initially set at the analog signal transmission/reception mode (first operation mode) since diskettes (3.5 inch FDs) are normally used in the data read/write apparatus 200.

Now, when the operation mode in the data read/write apparatus 200 is switched from the analog signal transmission/reception mode to the digital signal transmission/reception mode, it becomes possible for digital signals to be transmitted and received between the data read/write apparatus 200 and the first diskette-type adapter 1A by means of the electrical contact established between the four terminals 241 - 244 of the data read/write apparatus 200 and the four terminals 41 - 44 of the first diskette-type adapter 1A.

Further, when the terminals 241 - 247 of the terminal portion 204 of the data read/write apparatus 200 come into contact with the terminals 41 - 47 of the terminal portion 4 of the first diskette-type adapter 1A, power is supplied to the first diskette-type adapter 1A from the data read/write apparatus 200 via the terminals 245 and 246 of the data read/write apparatus 200 and the terminals 45 and 46 of the first diskette-type adapter 1A.

The read/write control circuit 60 controls the operations of the data read/write apparatus 200 in accordance with a WRITE CONTROL signal and a READ CONTROL signal transmitted and received between the read/write control circuit 60 and the computer 50. Further, the read/write control circuit 60 receives data (WRITE DATA) from the computer 50 and transmits data (READ DATA) to the computer 50. In carrying out control of the data read/write apparatus 200, thirteen signal lines which connects electrically between the read/write control circuit 60 and the data read/write apparatus 200 are selectively used in accordance with predetermined controls. Further, the computer 50 supplies electrical power to the data read/write apparatus 200 via a power supply line and a GND line.

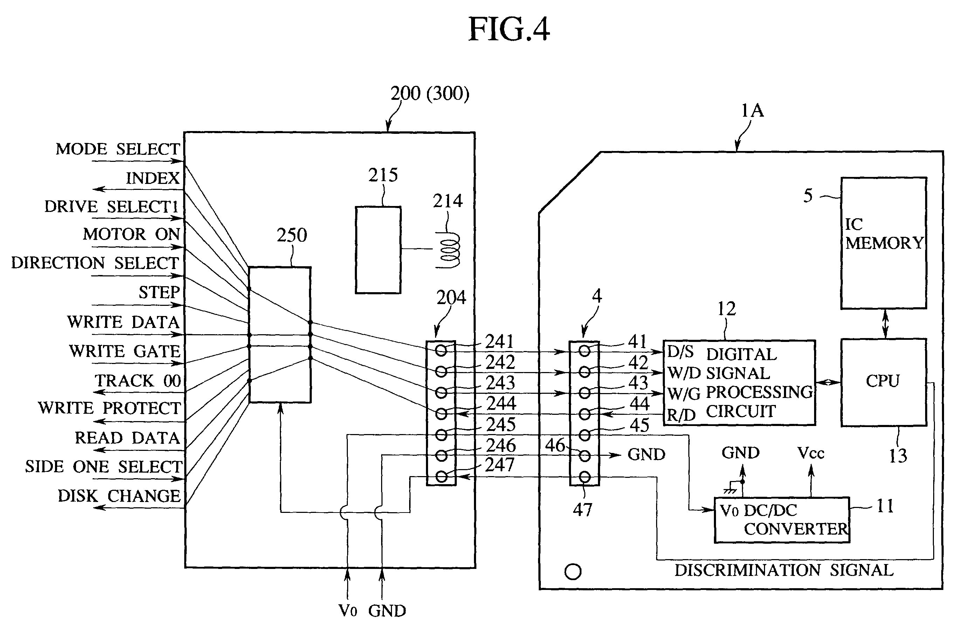

Next, the general structure of the data read/write apparatus 200 will be described with reference to Fig. 4. In this regard, Fig. 4 is a block diagram showing the data read/write apparatus 200 in a state that the first diskette-type adapter 1A has been loaded into the data read/write apparatus 200.

The data read/write apparatus 200 is basically equipped with the terminal portion 204, the magnetic head 214, an analog signal processing circuit 215, and a switching circuit 250 for switching an operation mode. As described above, thirteen signals such as a DRIVE SELECT signal, a WRITE DATA signal, a WRITE GATE signal and a READ DATA signal are transmitted and received between the data read/write apparatus 200 and the read/write control circuit 60.

In the present embodiment, the DRIVE SELECT signal is used as a signal to select the data read/write apparatus 200 from among the plurality of devices (e.g., data read/write apparatuses) connected to the computer 50. The WRITE DATA signal is a signal related to data to be recorded on the data storage (e.g., an IC memory, magnetic disk). The WRITE GATE signal is a signal for controlling a data writing process (recording process) and a data reading process (playback process) when reading out data from and writing data in the data storage. The READ DATA signal is a signal related to the data read out from the storage. In this connection, the WRITE DATA signal and the READ DATA signal undergo MFM (Modified Frequency Modulation) process.

In a manner similar to that described for the terminal portion 4 of the first diskette-type adapter 1A, the terminal portion 204 of the data read/write apparatus 200 is equipped with digital signal transmission/reception means including a D/S terminal 241, a W/D terminal 242, a W/G terminal 243 and an R/D terminal 244; a power supply means including a power supply terminal 245 and a GND terminal 246; and a discrimination signal terminal 247 through which a discrimination signal (which will be descried later) is transmitted to the data read/write apparatus 200 from the first diskette-type adapter 1A. These terminals 241 - 247 are arranged so as to be able to make contact with the corresponding terminals 41 - 47 of the terminal portion 4 of the first diskette-type adapter 1A, when the first diskette-type adapter 1A is loaded in the read/write apparatus.

In the embodiment shown in Fig. 4, the discrimination signal is transmitted to the data read/write apparatus 200 from the CPU 13 of the first diskette-type adapter 1A. By referring to this discrimination signal, the data read/write apparatus 200 discriminates the type of diskette-type adapter loaded in the data read/write apparatus 200.

Further, by referring to this discrimination signal, the data read/write apparatus 200 makes a judgement as to whether the diskette-type adapter loaded in the data read/write apparatus 200 is equipped with the terminals 41 - 44 or a magnetic coil as a data transmission/reception means.

Now, when the first diskette-type adapter 1A has been loaded in the data read/write apparatus 200, the DRIVE SELECT (D/S) signal is transmitted from the data read/write apparatus 200 to the first diskette-type adapter 1A via the terminal 41 and the terminal 241. Therefore, as a modification of the present invention, the first diskette-type adapter 1A may be constructed to transmit the received DRIVE SELECT (D/S) signal back to the data read/write apparatus 200, and this DRIVE SELECT (D/S) signal transmitted back to the data read/write apparatus 200 may be used as a discrimination signal.

As mentioned above, the operation mode of the data read/write apparatus 200 is initially set at the analog signal transmission/reception mode since diskettes (3.5 inch FD)are normally used in the data read/write apparatus 200. Namely, during the state before the first diskette-type adapter 1A is loaded into the data read/write apparatus 200, the data read/write apparatus 200 is set in the analog signal transmission/reception mode in which the magnetic head 214 is used to transmit and receive signals.

However, because the first diskette-type adapter 1A is equipped with only the terminals 41 - 44 which serve as a digital signal transmission/reception means, it is impossible for the data read/write apparatus 200 to use the magnetic head 214 to read and write data in the same manner as is done for a 3.5 inch FD.

Accordingly, in order to read out data from and write data in the IC memory in the first diskette-type adapter 1A, the operation mode of the data read/write apparatus 200 needs to be switched from the analog signal transmission/reception mode (in which the magnetic head 214 is used) to the digital signal transmission/reception mode (in which the terminal portion 204 is used).

For this reason, the switching circuit 250 which acts as the switching means of the present invention is provided in the data read/write apparatus 200. Namely, in response to the discrimination signal transmitted from the first diskette-type adapter 1A, the switching circuit 250 switches the operation mode of the data read/write apparatus 200 to the digital signal transmission mode so as to match the first diskette-type adapter 1A.

Now, when the switching circuit 250 switches the operation mode from the analog signal transmission/reception mode (in which the magnetic head 214 is used) to the digital signal transmission/reception mode (in which the terminals 241 - 244 is used), the control circuit and other elements provided in the computer 50 selectively connect the terminals 241 - 244 to all or some of the thirteen signal lines which connect between the data read/write apparatus 200 and the read/write control circuit 60 (see Fig. 4).

In the embodiment shown in Fig. 4, the terminals 241 - 244 of the terminal portion 204 are electrically connected to the DRIVE SELECT signal line, the WRITE DATA signal line, the WRITE GATE signal line and the READ DATA signal line among thirteen signal lines which are connected between the read/write control circuit 60 and the data read/write apparatus 200, respectively.

Next, with reference to Fig. 4, the operations of the data read/write apparatus 200 and the first diskette-type adapter 1A will be described below.

When the first diskette-type adapter 1A is loaded into the data read/write apparatus 200, the terminal portion 4 of the first diskette-type adapter 1A makes electrical contact with the terminal portion 204 of the data read/write apparatus 200. In this way, it becomes possible for the data read/write apparatus 200 to supply power to the first diskette-type adapter 1A via the terminals 245 and 246 (power supply means) of the data read/write apparatus 200 and the terminals 45 and 46 (power reception portion) of the first diskette-type adapter 1A.

Further, when the terminal portion 4 of the first diskette-type adapter 1A comes into electrical contact with the terminal portion 204 of the data read/write apparatus 200, a discrimination signal which shows that the loaded object is the first diskette-type adapter 1A is transmitted to the data read/write apparatus 200 from the first diskette-type adapter 1A via the terminal 47 of first diskette-type adapter 1A and the terminal 247 of the data read/write apparatus 200.

Then, after the data read/write apparatus 200 has received such a discrimination signal, the switching circuit 250 switches the operation mode from the analog signal transmission/reception mode (in which the magnetic head 214 is used) to the digital signal transmission/reception mode (in which the terminal portion 204 is used). In this way, it becomes possible to transmit and receive digital signals (which has undergone MFM process) between the data read/write apparatus 200 and the first diskette-type adapter 1A via the terminal portions 4 and 204. As a result, it becomes possible for the data read/write apparatus 200 to read out data from and write data in the IC memory of the first diskette-type adapter 1A.

As will be described later, predetermined controls carried out by elements such as the read/write control circuit 60, the CPU 13 of the first diskette-type adapter 1A, and the digital signal processing circuit 12 enables to read out data from and write data in the IC memory of the first diskette-type adapter 1A. In this regard, it should be noted that there is no particular limit on the data transmission rate.

Now, in the embodiment described above, the first diskette-type adapter 1A and the data read/write apparatus 200 are each provided with seven terminals. Further, by means of these seven terminals, the first diskette-type adapter 1A and the data read/write apparatus 200 are electrically connected over seven signal lines. However, the present invention is not limited to this arrangement. For example, the number of terminals and the number of signal lines can be increased appropriately in accordance with the signal transmission rate.

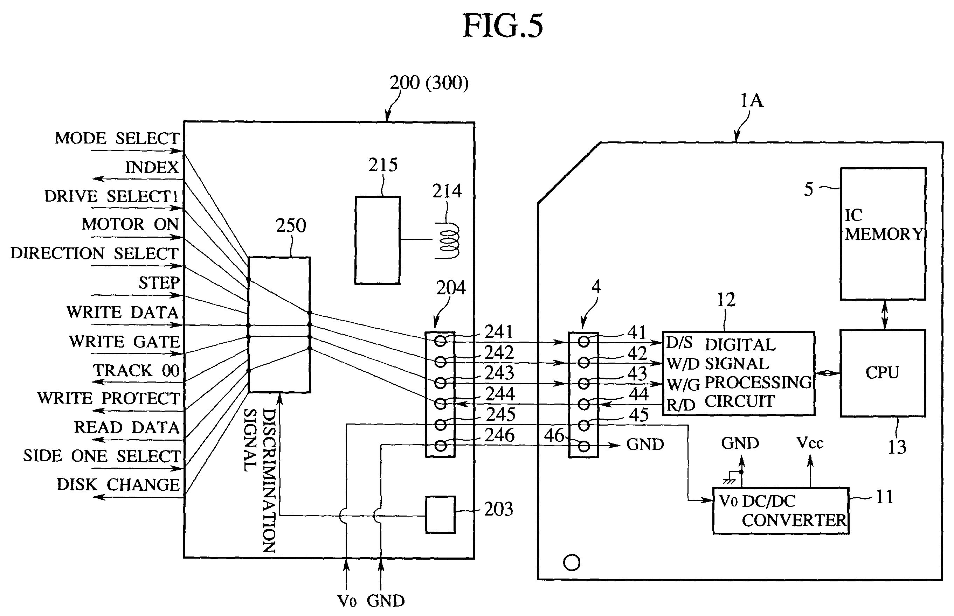

Next, Fig. 5 is a block diagram showing the data read/write apparatus 200 in a state that a different type of the first diskette-type adapter 1A has been loaded into the data read/write apparatus 200.

The data read/write apparatus 200 shown in Fig. 5 uses a different discrimination means from that of the data read/write apparatus 200 shown in Fig. 4. Namely, the data read/write apparatus 200 shown in Fig. 4 uses a discrimination signal transmitted from the first diskette-type adapter 1A to discriminate the first diskette-type adapter 1A, while the data read/write apparatus 200 shown in Fig. 5 uses a discrimination signal supplied from a detection switch 203 provided in the data read/write apparatus 200 to discriminate the first diskette-type adapter 1A. For this reason, in the data read/write apparatus 200 shown in Fig. 5, no discrimination signal is outputted from the first diskette-type adapter 1A. Further, because there is no need to provide a discrimination signal terminal in the terminal portion 204 of the data read/write apparatus 200, there are only six terminals provided in the data read/write apparatus 200 shown in Fig. 5.

Next, the structure and operation of the data read/write apparatus 200 shown in Fig. 5 will be described below.

As will be described later, the detection switch 203 includes a switch formed into a protruding shape. Accordingly, when the first diskette-type adapter 1A is loaded into the data read/write apparatus 200, the detection switch 203 enters the opening 3 (see Fig. 1) of the first diskette-type adapter 1A. Further, when the first diskette-type adapter 1A is loaded into the data read/write apparatus 200, the detection switch 203 outputs a discrimination signal in accordance with the depth of the opening 3 of the first diskette-type adapter 1A.

Now, in response to the discrimination signal outputted from the detection switch 203, the data read/write apparatus 200 carries out the same controls as those described for the embodiment shown in Fig. 4.

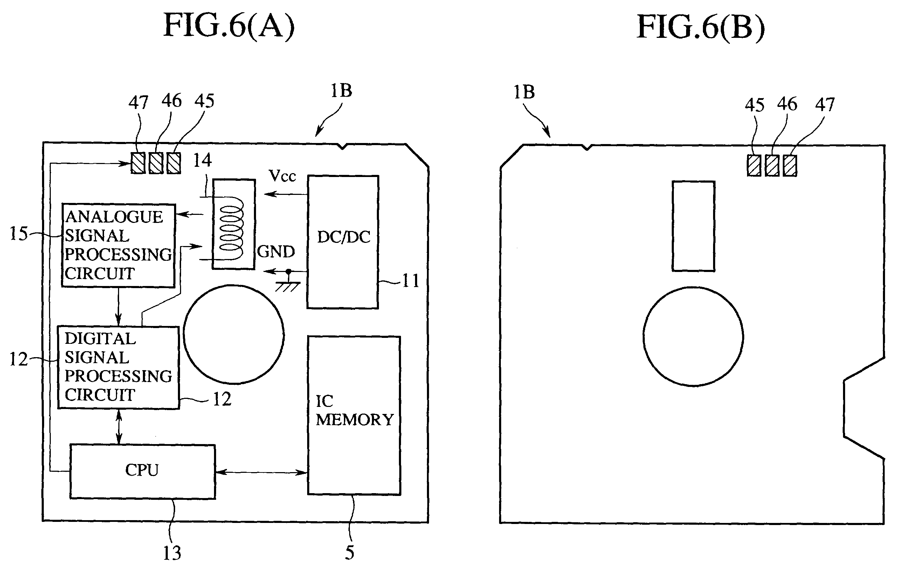

Next, the structure of a second diskette-type adapter 1B will be described with reference to Fig. 6. In this regard, the elements of the second diskette-type adapter 1B that have the same structure, function and effect as the elements of the first diskette-type adapter 1A are identified by the same reference numbers.

Fig. 6 shows the particular structure of the second diskette-type adapter 1B, in which Fig. 6(A) is a block diagram showing the internal structure of the second diskette-type adapter 1B, and Fig. 6(B) is a bottom view of the second diskette-type adapter 1B.

Now, when data is read out from and written in the IC memory 5 loaded in the second diskette-type adapter 1B, the magnetic head 214 of the data read/write apparatus 200 is used in the same manner as for the case of a 3.5 inch diskette and the prior art diskette-type adapter 1C shown in Fig. 21. In this connection, it is to be noted that the second diskette-type adapter 1B uses a magnetic coil 14 (analog signal transmission/reception means) in place of the terminals (digital signal transmission/reception means) as a data read/write means.

The second diskette-type adapter 1B is provided with various electronic components such as a magnetic coil 14, an analog signal processing circuit 15, a digital signal processing circuit 12, a DC/DC converter 11, a CPU 13, and a terminal portion 4 which includes terminals 45 and 46 for receiving power and a discrimination signal terminal 47.

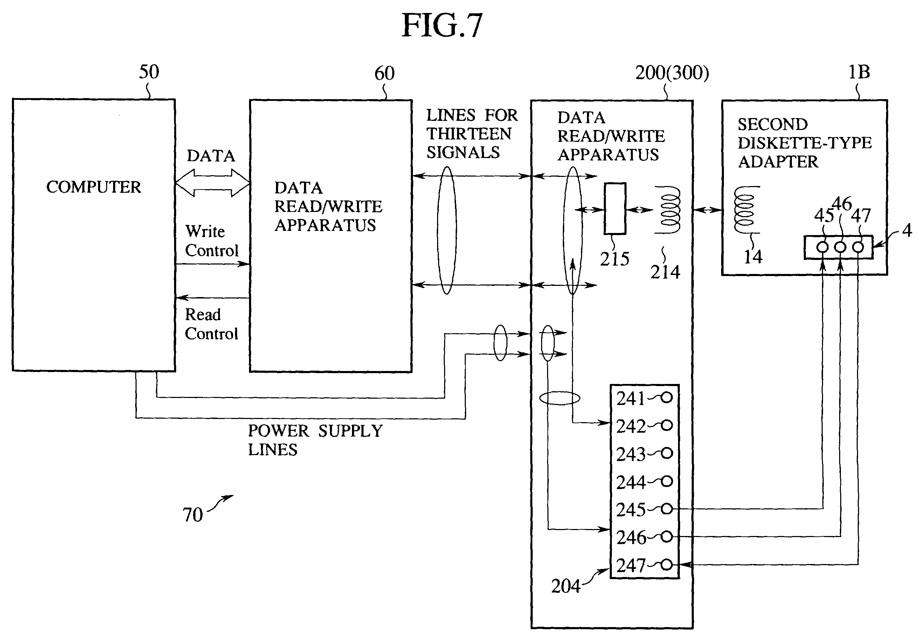

Next. Fig. 7 is a block diagram showing a data read/write system 70 which uses the data read/write apparatus 200 (300) according to the present invention in which the second diskette-type adapter 1B is used. In this connection, Fig. 7 shows a state that the second diskette-type adapter 1B has been loaded into the data read/write apparatus 200.

Now, with reference to Fig. 7, an overall structure of the data read/write system 70 which uses the data read/write apparatus 200 of the present invention will be given below.

The data read/write system 70 includes a computer 50, a read/write control circuit 60 provided in the computer 50, the data read/write apparatus 200 which is controlled by the read/write control circuit 60, and the second diskette-type adapter 1B which is driven by the data read/write apparatus 200.

In this system, the data read/write apparatus 200 supplies power to the second diskette-type adapter 1B via the terminals 245 and 246 of the data read/write apparatus 200 and the terminals 45 and 46 of the second diskette-type adapter 1B.

Further, in accordance with a discrimination signal transmitted from the second diskette-type adapter 1B to the data read/write apparatus 200 via the terminal 47 of the second diskette-type adapter 1B and the terminal 247 of the data read/write apparatus 200, the data read/write apparatus 200 maintains the operation mode at the analog signal transmission/reception mode (in which the magnetic head 214 is used).

In this state, the transmission and reception of analog signals between the data read/write apparatus 200 and the first diskette-type adapter 1A is carried out as follows. Namely, when reading out data from the IC memory in the second diskette-type adapter 1B, the magnetic coil 14 of the second diskette-type adapter 1B is used to produce a magnetic field, and the magnetic head 214 of the data read/write apparatus 200 is used to sense changes of the magnetic field produced by the magnetic coil 14 of the second diskette-type adapter 1B. Conversely, when writing data in the IC memory in the second diskette-type adapter 1B, the magnetic head 214 of the data read/write apparatus 200 is used to produce a magnetic field, and the magnetic coil 14 of the second diskette-type adapter 1B is used to sense changes of the magnetic field produced by the magnetic head 214 of the data read/write apparatus 200.

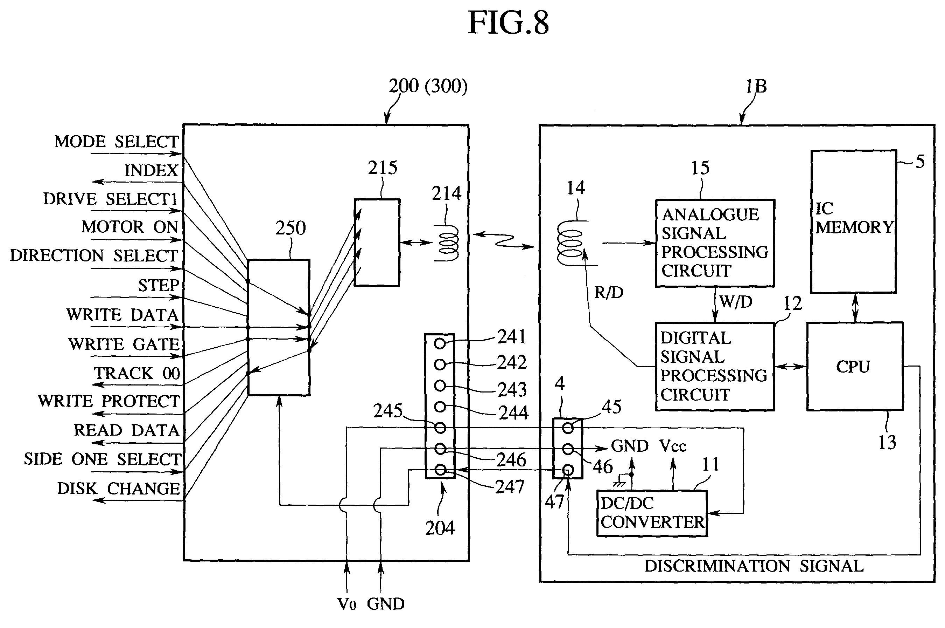

Next, Fig. 8 is a block diagram showing the data read/write apparatus 200 in a state that the second diskette-type adapter 1B has been loaded in the data read/write apparatus 200. Hereinafter, with reference to Fig. 8, a description of the operations of the data read/write apparatus 200 and the second diskette-type adapter 1B will be given below.

In a manner similar to that described for the case of the first diskette-type adapter 1A, when the second diskette-type adapter 1B is loaded into the data read/write apparatus 200, the data read/write apparatus 200 supplies power to the second diskette-type adapter 1B via the terminals 245 and 246 of the data read/write apparatus 200 and the terminals 45 and 46 of the second diskette-type adapter 1B.

Further, in a manner similar to that described for the case of the first diskette-type adapter 1A, when the second diskette-type adapter 1B is loaded into the data read/write apparatus 200, the second diskette-type adapter 1B transmits a discrimination signal to the data read/write apparatus 200.

Then, by referring to the received discrimination signal, the data read/write apparatus 200 recognizes that the loaded second diskette-type adapter 1B includes only the magnetic coil 14 (analog signal transmission/reception means) as means for transmitting and receiving signals.

Therefore, the switching of the operation mode by the switching circuit described above is not carried out in this case. Namely, the operation mode is maintained in the initial setting (that is, stays in the analog signal transmission/reception mode in which the magnetic head 214 is used). In this way, it becomes possible to transmit and receive analog signals between the data read/write apparatus 200 and the second diskette-type adapter 1B.

Next, with reference to Fig. 8, a description will be given for the operations of the data read/write apparatus 200 and the second diskette-type adapter 1B when writing data in the IC memory 5 of the second diskette-type adapter 1B.

First, a write command and information to be written (WRITING DATA) are transmitted from the computer 50 to the data read/write apparatus 200 via the read/write circuit 60. Then, the data read/write apparatus 200 causes the magnetic head 214 to produce a magnetic field in accordance with an analog signal (which has undergone MFM process) transmitted from the analog signal processing circuit 215.

At this time, the magnetic field produced by the magnetic head 214 induces a corresponding electrical current in the magnetic coil 14 of the second diskette-type adapter 1B. In this way, analog signals which correspond to the WRITING DATA are transmitted to the second diskette-type adapter 1B from the data read/write apparatus 200.

Analog signals received by the magnetic coil 14 of the second diskette-type adapter 1B are transmitted to the analog signal processing circuit 15. The analog signal processing circuit 15 converts the MFM processed analog signals into corresponding digital signals, and then the digital signals are transmitted to the digital signal processing circuit 12. Next, the digital signal processing circuit 12 carries out a predetermined conversion on such received signals, and then these converted signals are transmitted to the CPU 13. Then, in accordance with such converted signals received from the digital signal processing circuit 12, the CPU 13 controls all operations of the second diskette-type adapter 1B and writes the data in a predetermined address of the IC memory.

Next, a description will be given for the operations of the data read/write apparatus 200 and the second diskette-type adapter 1B when reading out data stored in the IC memory 5 of the second diskette-type adapter 1B.

First, a read command is transmitted from the computer 50 to the data read/write apparatus 200 via the read/write control circuit 60. This read command is transmitted to the second diskette-type adapter 1B in the same manner as that for writing data in the IC memory, and then inputted into the CPU 13 of the second diskette-type adapter 1B.

In accordance with such a read command, the CPU 13 reads out data stored in predetermined addresses of the IC memory 5. Next, the CPU 13 adds a predetermined command signal to the digital signals read out from the IC memory 5, and then such signals are transmitted to the digital signal processing circuit 12.

The digital signal processing circuit 12 converts the digital signals transmitted from the CPU 13 into digital signals that correspond to analog signals to which an MFM process is carried out, and then such converted signals are sent to the magnetic coil 14. The magnetic coil 14 produces a magnetic field in accordance with the digital signal transmitted from the digital signal processing circuit 12.

At this time, the magnetic field produced by the magnetic coil 14 induces a corresponding electrical current in the magnetic head 214 of the data read/write apparatus 200. In this way, analog signals which correspond to the data read out from the IC memory 5 in the second diskette-type adapter 1B are produced in the magnetic head 204 of the data read/write apparatus 200.

The analog signals produced in the magnetic head 214 of the data read/write apparatus 200 are then transmitted to the analog signal processing circuit 215. The analog signal processing circuit 215 converts the analog signals into corresponding digital signals, and then the digital signals are transmitted to the computer 50 via the read/write control circuit 60.

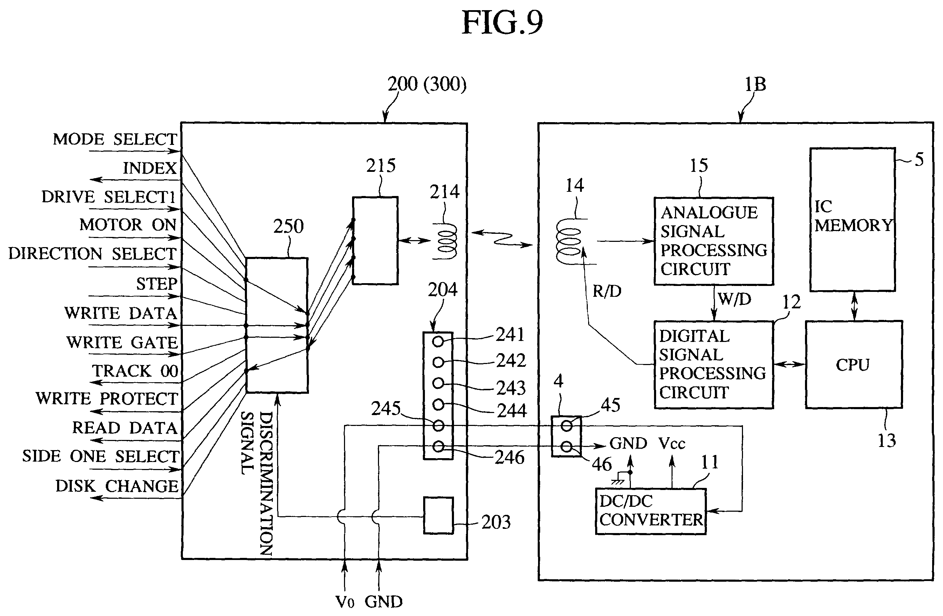

Next, Fig. 9 is a block diagram showing the data read/write apparatus 200 (300) in a state that the second diskette-type adapter 1B has been loaded into the data read/write apparatus 200.

The data read/write apparatus 200 shown in Fig. 9 uses a different discrimination means from that of the data read/write apparatus 200 shown in Fig. 8. Namely, the data read/write apparatus 200 shown in Fig. 8 uses a discrimination signal transmitted from the second diskette-type adapter 1B to discriminate the second diskette-type adapter 1B, while the data read/write apparatus 200 shown in Fig. 9 uses a discrimination signal outputted from a detection switch 203 provided in the data read/write apparatus 200 to discriminate the second diskette-type adapter 1B.

Next, the operation of the data read/write apparatus 200 shown in Fig. 9 will be described below.

In a manner similar to that described for the embodiment shown in Fig. 5, the detection switch 203 of the data read/write apparatus 200 shown in Fig. 9 is constructed from a switch formed into a protruding shape. Accordingly, when the second diskette-type adapter 1B is loaded into the data read/write apparatus 200, the detection switch 203 enters the opening 3 of the second diskette-type adapter 1B. Further, when the second diskette-type adapter 1B is loaded into the data read/write apparatus 200, the detection switch 203 outputs a discrimination signal in accordance with the depth of the opening 3 of the second diskette-type adapter 1B.

Now, in accordance with the discrimination signal outputted from the detection switch 203, the data read/write apparatus 200 carries out the same controls as those described for the embodiment shown in Fig. 8.

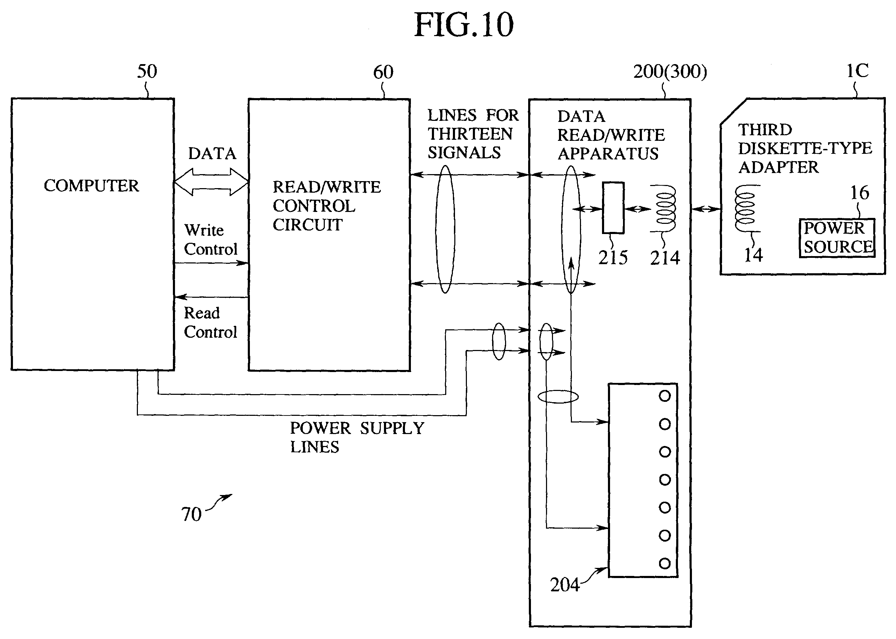

Next, Fig. 10 is a block diagram showing a data read/write system 70 which uses the data read/write apparatus 200 (300) according to the present invention in which a third diskette-type adapter 1C is used. In this connection, Fig. 10 shows a state that the third diskette-type adapter 1C has been loaded into the data read/write apparatus 200. Hereinafter, with reference to Fig. 10, an overall structure of the data read/write system 70 which uses the data read/write apparatus 200 of the present invention will be given below.

The data read/write system 70 shown in Fig. 10 includes a computer 50, a read/write control circuit 60 provided in the computer 50, the data read/write apparatus 200 (300) which is controlled by the read/write control circuit 60, and the third diskette-type adapter 1C which is driven by the data read/write apparatus 200.

In this regard, the third diskette-type adapter 1C corresponds to the prior art diskette-type adapter 1C shown in Fig. 21 which requires the use of the magnetic head 214 of the data read/write apparatus 200 to read out and write data.

When reading out data from and writing data in the IC memory inserted in the third diskette-type adapter 1C, the magnetic head 214 of the data read/write apparatus 200 is used in the same manner as that for a 3.5 inch type diskette. In this regard, it is to be noted the following points should be noted. Namely, the third diskette-type adapter 1C uses the magnetic coil 14 (analog signal transmission/reception means) as a data read/write means in place of the terminals (digital signal transmission/reception means) used in the first diskette-type adapter 1A. Further, the third diskette-type adapter 1C has no terminal portion and is provided with an internal power source.

Now, because the third diskette-type adapter 1C is not equipped with a terminal portion, when the third diskette-type adapter 1C is loaded into the data read/write apparatus 200, the third diskette-type adapter 1C does not transmit a discrimination signal as described above to the data read/write apparatus 200. Accordingly, the predetermined controls (e.g., an operation for switching the operation mode) performed in the data read/write apparatus 200 in response to a discrimination signal are not carried out for the case of the third diskette-type adapter 1C.

Then, in the same manner as was described above for the case of the second diskette-type adapter 1B, analog signals are transmitted and received between the third diskette-type adapter 1C and the data read/write apparatus 200 via the magnetic coil 14 of the third diskette-type adapter 1C and the magnetic head 214 of the data read/write apparatus 200. Further, because the third diskette-type adapter 1C is equipped with an internal power source for driving the third diskette-type adapter 1C, it is possible to read out and write data without supply power from the data read/write apparatus 200.

As was described above, the operation mode of the data read/write apparatus 200 is initially set in the analog signal transmission/reception mode. Accordingly, it is possible to transmit and receive analog signals between the data read/write apparatus 200 and the third diskette-type adapter 1C using the magnetic head 214 and the magnetic coil 14.

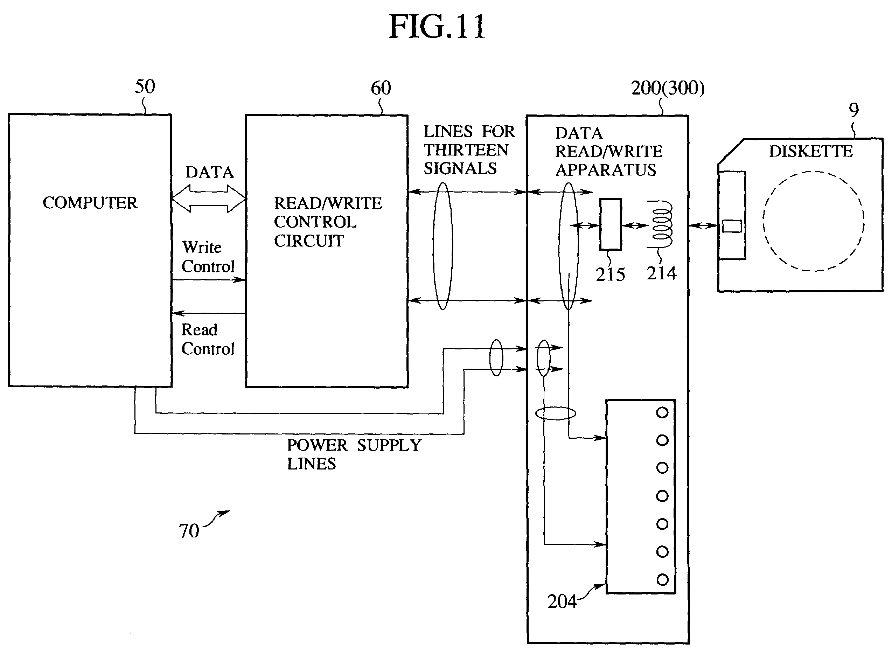

Next, Fig. 11 is a block diagram showing another data read/write system 70 which uses the data read/write apparatus 200 (300) according to the present invention in which a 3.5 inch FD is used. In this connection, Fig. 11 shows a state that the 3.5 inch FD has been loaded into the data read/write apparatus 200.

In the case where the 3.5 inch FD is loaded, the data read/write apparatus 200 according to the present invention carries out the same operations as a normal FDD. Namely, in the case where the 3.5 inch FD is loaded, the data read/write apparatus 200 reads out data from and writes data on the magnetic disk of the diskette using the magnetic head 214.

Now, as was described above, the operation mode of the data read/write apparatus 200 is initially set in the analog signal transmission/reception mode. Accordingly, even in the case where the data read/write apparatus 200 does not include a means for recognizing a 3.5 inch FD, the data read/write apparatus 200 can read out data from and write data on the magnetic disk of the 3.5 inch type diskette in the same manner as an existing FDD.

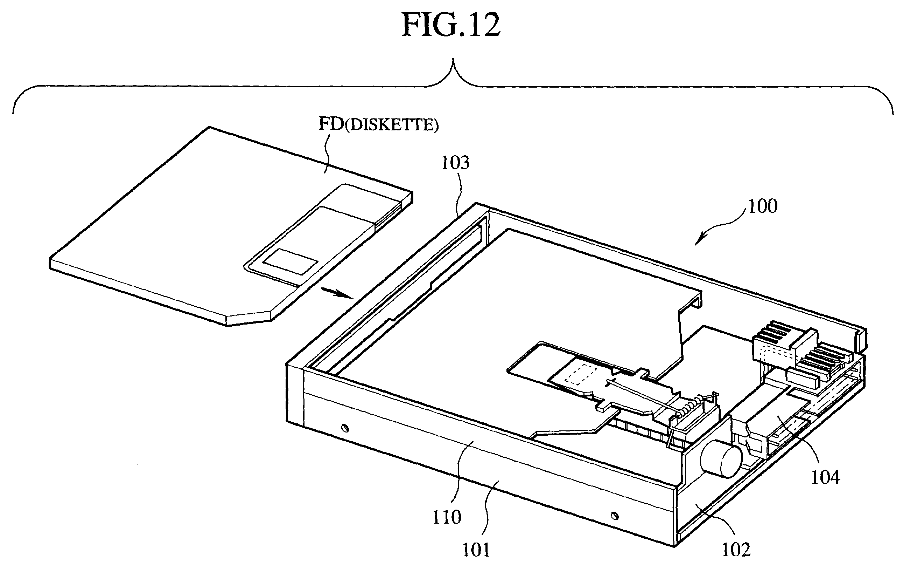

Next, the detailed structure of the data read/write apparatus 200 according to the present invention will be described with reference to Figs. 12 - 20.

In this regard, the data read/write apparatus of the present invention is configured by improving a disk drive for 3.5 inch FD (hereinafter referred to as a "FDD"). According to such data read/write apparatus, it is possible to transmit and receive data to and from each of the first diskette-type adapter 1A shown in Fig. 2, the second diskette-type adapter 1B shown in Fig. 6, and the prior art third diskette-type adapter 1C shown in Fig. 21. As described above, each of the diskette-type adapters 1A - 1C are formed to have roughly the same shape and dimensions as the jacket of a 3.5 inch FD.

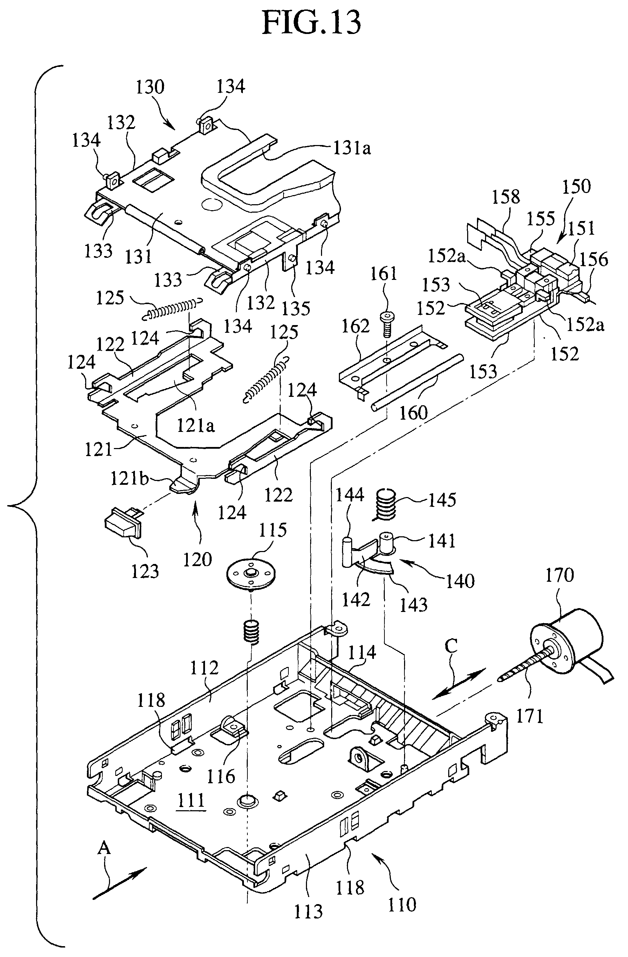

The data read/write apparatus of the present invention has a structure similar to the basic structure of a widely used FDD. For this reason, with reference to Figs. 12 and 13, the basic structure and operation of the FDD 100 will first be given for a case where a 3.5 inch FD (diskette) is used as a data storage.

In this regard, Fig. 12 is a perspective view of the FDD 100, which shows a state that the upper cover is removed. Fig. 13 is a perspective view showing the main elements of the FDD 100.

As shown in Fig. 12, the FDD 100 is formed into a roughly flat box shape and includes a lower chassis 101, a circuit board 102 provided on the lower chassis 101, and a base frame 110 provided on the circuit board 102.

In the FDD 100, various elements that will be described later are provided on the base frame 110. Further, a front panel formed with an opening to allow insertion of a diskette (FD) is provided on the front portion of the FDD 100. Furthermore, in the rear portion of the FDD 100, there is provided an interface connector 104 to enable transmission and reception of signals between the FDD 100 and the computer 50. Moreover, there is also provided a power connector to receive power from the computer 50.

As shown in Fig. 13, the base frame 110 includes a bottom portion 111, left and right side walls 112 and 113, and a rear side wall 114. In this regard, the base frame 110 is formed by bending a metal plate. Further, as mentioned above, the base frame 110 is provided on the circuit board 102. This circuit board 102 is equipped with various electronic components and a spindle motor (not shown in the drawing).

Further, the base frame 110 includes a disk table 115 which is rotated by the spindle motor to rotate the magnetic disk of the diskette; an eject plate 120 which can slidably move on the base frame 110; a disk holder 130 for holding a loaded diskette therein; a lock lever 140 for locking the eject plate 120 in a rear position thereof; a carriage 150 equipped with a pair of magnetic heads 153; a guide rod 160 along which the carriage 150 is guided in a radial direction of a magnetic disk; a pressing member 162 which uses a screw 61 to fix the guide rod 160 at a predetermined position of the bottom portion 111 of the base frame 110; and a stepping motor 170 for moving the carriage 150.

The eject plate 120 is slidably move over the base frame 110 in the forward and backward direction (i.e., in the diskette insertion and removal direction indicated by the arrow A) between a front position and a rear position. Further, the eject plate 120 is formed with a bottom plate 121 having a cut-away portion to prevent obstruction of the rotation of the disk table 115, and side plates 122 which are formed by bending the left and right sides of the bottom plate 121 upwardly.

In order to guide the eject plate 120, the bottom plate 121 is provided with a guide groove 121a which engages a guide protrusion 116 formed in the bottom portion 111 of the base frame 110, and a protruding portion 121b to which an eject button 123 is mounted.

Further, a groove-shaped slanting cam (hereinafter referred to as "cam groove") 124 is formed at the front portion and the rear portion on each side plate 122. Each cam groove 124 includes a horizontal portion and a slanting portion which slants downward from the horizontal portion toward the rear.

A pair of springs 125 are connected to the eject plate 120 to apply a biasing force to the eject plate 120 so that the eject plate 120 normally biased from the rear position toward the front position. When the eject plate 120 is positioned at the rear position, the lock lever 140 engages with the eject plate 120. This engagement makes it possible to lock the eject plate 120 at the rear position.

In accordance with the movement of the eject plate 120, the disk holder 130 moves up and down between an eject position where the diskette can be inserted or removed, and a loaded position where the FDD 100 can read out data from and write data on a magnetic disk of a diskette.

The disk holder 130 includes a top plate portion 131, left and right side wall portions 132, and a diskette holding portion 133 formed by bending the end portion of each of the left and right side wall portions 132 inward. These portions of the disk holder 130 define a space for holding a diskette within the disk holder 130.

Further, a U-shaped opening 131a is formed in the top plate portion 131 of the disk holder 130 from the rear edge to roughly the center thereof. This opening 131a makes it possible for the carriage 150 to move in a radial direction of a magnetic disk of a loaded diskette.

The left and right side wall portions 132 of the disk holder 130 are designed to fit between the left and right side plates 122 of the eject plate 120. Further, pins 134 are provided on the front and rear portions of each side wall portion 132 so that these pins engage with the cam grooves 124 of the left and right side plates 122 of the eject plate 120, respectively.

Further, guide members 135 protruding downward are provided at roughly the center of each side wall portion 132. These guide members 135 are inserted into guide grooves 118 formed at corresponding positions of the bottom portion 111 of the base frame 110, respectively. This arrangement allows the disk holder 130 to move in up and down direction with respect to the base frame 110.

The lock lever 140 is provided to hold the eject plate 120 in the rear position as described above as well as to open (slide) the shutter of a 3.5 inch diskette.

In more detail, the lock lever 140 includes an axle portion 141 which rotates around an axis which is orthogonal to the bottom portion 111 of the base frame 110; an extension portion 142 which extends in a radial direction away from the axle portion 141; an arc-shaped engagement portion 143 which protrudes from the extension portion 142 to engage the eject plate 120; and a shutter engagement portion 144 provided on the tip of the extension portion 142 to engage with the shutter of the diskette. Further, a spring 145 is provided to bias the lock lever 140 in the counterclockwise direction.

Accordingly, when the side portion of the shutter of the diskette comes into contact with the shutter engagement portion 144 as the diskette is inserted into the disk holder 130, the biasing force of the spring 145 is overcome and the lock lever 140 begins to rotate in the clockwise direction around the axle portion 141. In this way, it becomes possible to slide the shutter and then open it. Further, the rotation of the lock lever also makes it possible to release the engagement between the eject plate 120 and the engagement portion 143.

The carriage 150 roughly includes a base 151, upper and lower arms 152 which extend from the base 151, and a pair of magnetic heads 153. Further, each of the pair of magnetic heads 153 is mounted on the tip portion of each of the upper and lower arms 152 with a gimbals spring to enable a displacement of each magnetic head 153. This pair of magnetic heads 153 are used to read out data from and write data on the magnetic disk.

Further, the base 151 is provided with a guide portion 155 into which the guide rod 160 is to be inserted, a coupling portion 156 which is to be engaged with a lead screw 171 of the stepping motor 170, and a flexible printed circuit 158 for transmitting and receiving signals to and from the magnetic heads 153.

The upper arm 152 of the carriage 150 is connected to the base 151 with a plate-like spring member (not shown in the drawings) to enable pivotal up and down movement of the upper arm 152. Further, engagement portions 152a are formed on the left and right side edges of the upper arm 152. These engagement portions 152a are formed to make engagement with the edge of the U-shaped opening 131a of the disk holder 130. These arrangement makes it possible for the engagement portions 152a to be displaced in the up and down directions in accordance with the up and down movement of the disk holder 130.

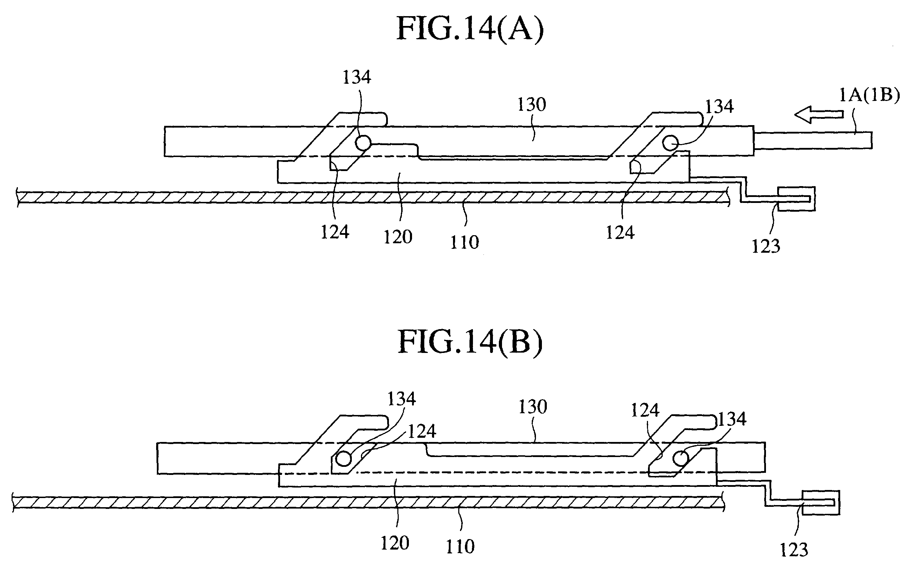

Next, with reference to Figs. 13 and 14, the operation of the FDD 100 will be described for the case where a diskette is loaded in the FDD 100.

First, in the state where no diskette is loaded, the eject plate 120 is positioned at the rear position. Further, the eject plate 120 is held (locked) at the rear position by the lock lever 140.

When the eject plate 120 is positioned at the rear position, the pins 134 of the disk holder 130 are engaged with the horizontal portions of the cam grooves 124 of the eject plate 120 (See Fig. 14(A)) to hold the disk holder 130 in a raised position (eject position).

In this eject position, the upper arm 152 of the carriage 150 is held in a raised position by the engagement between the engagement portions 152a and the edge of the U-shaped opening of the disk holder 130. Accordingly, when a diskette is inserted into the FDD 100 which is in the eject position, the inserted diskette is positioned between the upper and lower magnetic heads 153.

In more detail, when lading a diskette into the FDD 100, first, a diskette is inserted into the disk holder 130 through the opening 103 of the front panel. Then, when the side portion of the shutter of the inserted diskette comes into contact with the shutter engagement portion 144, the lock lever 140 begins to rotate. This rotation of the lock lever makes the shutter of the diskette slide.

Then, by continuing the insertion of the diskette, the engagement between the engagement portion 143 of the lock lever 140 and the eject plate 120 is released, and with the complete insertion of the diskette, the shutter is completely opened.

When the engagement between the engagement portion 143 of the lock lever 140 and the eject plate 120 is released, the biasing force of the springs 125 moves the eject plate 120 from the rear position toward the front position (that is, toward the right side of Fig. 14(A)). In accordance with such movement of the eject plate 120 toward the front position, the pins 134 of the disk holder 130 move downward along the slanting portion of the cams groove 124 of the eject plate 120 (See Fig. 14(B)).

When the eject plate 120 reaches the front position, the disk holder 130 is positioned at the lower position (read/write position). In this state, the disk table 115 supports the center hub of the magnetic disk of the diskette. Further, the pair of magnetic heads 153 are arranged on either side of the exposed magnetic disk to make it possible to read and write data.

Next, when ejecting the diskette from the FDD 100 after the reading and/or writing operation for the magnetic disk has been completed, the eject button 123 provided on the eject plate 120 is pressed in. This operation makes it possible to move the eject plate 120 from the front position to the rear position against the biasing force of the springs 125.

In accordance with the movement of the eject plate 120 from the front position to the rear position, the pins 134 of the disk holder 130 move upward along the slanting portions of the cam grooves 124 of the eject plate 120, whereby the disk holder 130 is moved upward (from the state shown in Fig. 14(B) to the state shown in Fig. 14(A)). Further, as the disk holder 130 is moved upward, the upper arm 152 of the carriage 150 also moves upward. As a result, the magnetic heads 153 are removed from the magnetic disk.

Now, when the eject plate 120 reaches the rear position (eject position) as the eject button 123 is being pressed in, the pins 134 of the disk holder 130 are positioned at the horizontal portions of the cam grooves 124 of the eject plate 120 (see Fig. 14(A)).

In this state, the biasing force of the spring 145 makes the lock lever 140 rotate toward the lock position, and this rotation pushes out the diskette. Further, the lock lever 140 locks the eject plate 120 at the locked position. In this way, it becomes possible to eject the diskette from the FDD 100.

Now, besides being equipped with a structure similar to the FDD described above, the data read/write apparatus according to the present invention is also equipped with the power supplying means, the digital signal transmission/reception means and the discrimination means as described above. Accordingly, in addition to normal diskettes (FD) and IC memories inserted in the prior art third diskette-type adapter 1C (See Fig. 21), the data read/write apparatus according to the present invention can also read out data from and write data in IC memories inserted in the first and second diskette-type adapters 1A and 1B (See Figs. 2 and 6) described above.

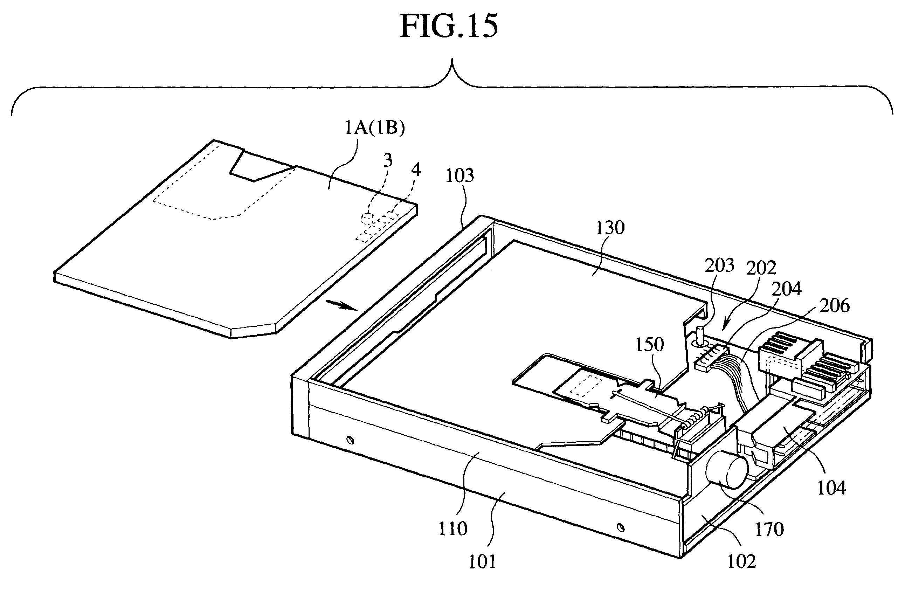

Next, with reference to Figs. 15 - 20, the preferred embodiments of the data read/write apparatus of the present invention will be described below. In this regard, because the data read/write apparatus of the present invention includes the basic structure of a FDD, those elements that are the same as the structural elements of the FDD 100 described above will be identified by the same reference numbers and characters.

Fig. 15 is a perspective view showing the data read/write apparatus 200 according to the first embodiment of the present invention.

As shown in Fig. 15, a terminal portion 4 having a plurality of terminals is arranged along the front left side edge of the bottom surface of the diskette-type adapter 1A (and 1B). Further, an opening 3 having predetermined depth is formed at a location adjacent to the terminal portion 4. This opening 3 is used by the data read/write apparatus 200 for recognition and positioning of diskette-type adapters and diskettes.

As was described previously above with reference to Figs. 1 and 2, the terminal portion 4 of the diskette-type adapter 1A includes seven terminals (terminals 41 - 47). Among these seven terminals, terminals 41 - 44 are used to transmit and receive digital signals, terminals 45 and 46 are used to receive power supplied from the data read/write apparatus 200, and terminal 47 is used to transmit a discrimination signal to the data read/write apparatus 200.

As was also mentioned above, the number and arrangement of the terminals of the diskette-type adapter 1A is not limited to the structure described above. For example, the number of terminals may be increased in accordance with the signal transfer rate and the control method.

The data read/write apparatus 200 is provided with a connector 202 to enable the transmission and reception of signals between the data read/write apparatus 200 and the diskette-type adapter 1A, and to enable the supply of power to the diskette-type adapter 1A from the data read/write apparatus 200. This connector 202 is provided on the base frame 110 so as to be arranged below the terminal portion 4 of the diskette-type adapter 1A when it is loaded into the data read/write apparatus 200.

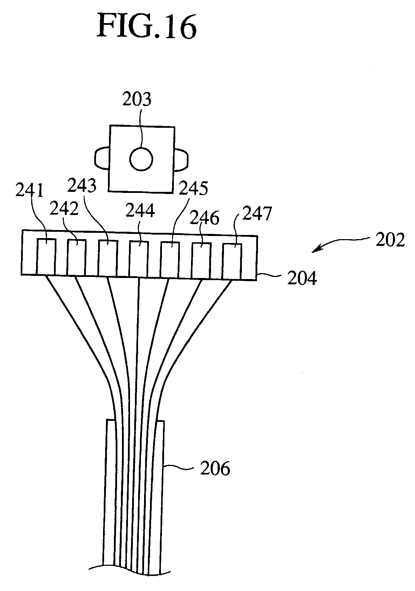

As shown in Fig. 16, the connector 202 includes a terminal portion 204 which is designed to come into electrical contact with the terminal portion 4 of the diskette-type adapter 1A to transmit and receive digital signals therebetween and to supply power, and further includes a positioning protrusion 203 to be inserted into the opening 3 of the diskette-type adapter 1A.

The terminal portion 204 of the data read/write apparatus 200 has terminals 241 - 247 which correspond to the terminals 41 - 47 of the diskette-type adapter 1A. The terminals 241 - 244 are used to transmit and receive digital signals, the terminals 245 and 246 are used to supply power, and the terminal 247 is used to receive a discrimination signal transmitted from the diskette-type adapter 1A.

The terminals 241 - 247 of the terminal portion 204 are configured to electrically contact with the terminals 41 - 47 of the diskette-type adapter 1A. Further, the terminals 241 - 247 of the terminal portion 204 are formed to have an elasticity not to raise the diskette-type adapter 1A which is in lower position (read/write position).

The terminals 241 - 247 are connected to a flexible printed circuit 206. This flexible printed circuit 206 is electrically connected to the circuit board 102 of the data read/write apparatus 200.

When the diskette-type adapter 1A is loaded into the data read/write apparatus 200 and then the terminal portion 4 of the diskette-type adapter 1A comes into contact with the terminal portion 204 of the data read/write apparatus 200, the data read/write apparatus 200 begins to supply power to the diskette-type adapter 1A via the terminals 245 and 246 of the data read/write apparatus 200 and the terminals 45 and 46 of the diskette-type adapter 1A.

Further, when the data read/write apparatus 200 has received a discrimination signal from the diskette-type adapter 1A via the terminal 247 of the terminal portion 204, the switching circuit 250 (see Fig. 4) of the data read/write apparatus 200 switches the operation mode (signal transmission/reception mode) from the analog signal transmission/reception mode to the digital signal transmission/reception mode.

In this way, the electrical connection is established between the four terminals 241 - 244 of the data read/write apparatus 200 and the four terminals 41 - 44 of the diskette-type adapter 1A, and this makes it possible to transmit and receive digital signals between the data read/write apparatus 200 and the diskette-type adapter 1A.

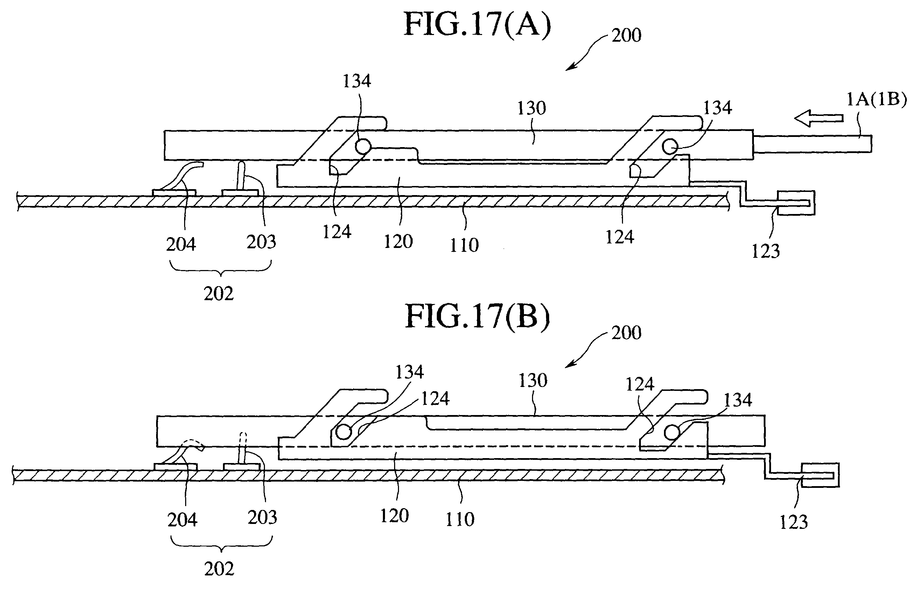

Next, with reference to Fig. 17, a description will be given for the operation of the data read/write apparatus 200 equipped with the connector 202.

Fig. 17(A) shows a state in which the disk holder 130 is positioned at the eject position (upper position). In this state, the operation mode of the data read/write apparatus 200 is set in the analog signal transmission/reception mode (which is an initial setting).

When the diskette-type adapter 1A is inserted into the disk holder 130, the engagement between the lock lever 140 (See Fig. 13) and the eject plate 120 is released. Further, when the diskette-type adapter 1A is loaded into the disk holder 130, the eject plate 120 moves toward the front position as shown in Fig. 17(B). In accordance with this movement, the disk holder 130 is displaced to the read/write position (lower position) along the cam grooves 124 of the eject plate 120.

When the disk holder 130 is lowered to the read/write position, the terminal portion 4 of the diskette-type adapter 1A comes into contact with the terminal portion 204 of the connector 202. In this way, each of the terminals of the terminal portion 4 is electrically connected with a corresponding terminal of the terminal portion 204 of the connector 202.

When an electrical connection is established between the terminal portion 4 of the diskette-type adapter 1A and the terminal portion 204 of the connector 202, the data read/write apparatus 200 supplies power to the diskette-type adapter 1A via the terminals 245 and 246 of the connector 202 and the terminals 45 and 46 of the diskette-type adapter 1A. Further, based on the discrimination signal transmitted from the diskette-type adapter 1A, the data read/write apparatus 200 recognizes that the loaded object is the diskette-type adapter 1A. Furthermore, in response to the transmitted discrimination signal, the switching circuit 250 of the data read/write apparatus 200 switches the operation mode from the analog signal transmission/reception mode to the digital signal transmission/reception mode.

Now, when the operation mode of the data read/write apparatus 200 is switched from the analog signal transmission/reception mode to the digital signal transmission/reception mode, it becomes possible to transmit and receive digital signals between the data read/write apparatus 200 and the diskette-type adapter 1A via the terminals 241 - 244 of the data read/write apparatus 200 and the terminals 41 - 44 of diskette-type adapter 1A. In this way, it becomes possible for the data read/write apparatus 200 to read out data from and write data in a data storage (e.g., an IC memory) in the diskette-type adapter 1A.

Next, when the diskette-type adapter 1A is to be ejected from the state described above, the eject button 123 is pressed inward in the same manner described above for the case of the 3.5 inch FD. This operation makes the eject plate 120 slide toward the rear position, whereby the disk holder 130 moves from the lowered position to the raised position along the cam grooves 124 of the eject plate 120.

In accordance with this movement of the disk holder 130, the terminal portion 4 of the diskette-type adapter 1A is removed from the terminal portion 204 of the connecting device 202. As a result, the electrical connection between the diskette-type adapter 1A and the connecting device 202 is broken.

Then, when the disk holder 130 is raised to the eject position, the diskette-type adapter 1A can be ejected in the same manner described above for the case of a 3.5 inch FD.

In this regard, it is to be noted that a diskette (FD) and the third diskette-type adapter 1C (See Fig. 10) do not have any a terminal portion. Accordingly, when a diskette or the third diskette-type adapter 1C is loaded in the data read/write apparatus 200, the discrimination signal described above is not transmitted to the data read/write apparatus 200. Consequently, for the case where a diskette or the third diskette-type adapter 1C is loaded in the data read/write apparatus 200, the predetermined controls (e.g., switching operation for switching the operation mode described above) performed in the data read/write apparatus 200 in response to the discrimination signal are not carried out.

However, as was described above, since the operation mode of the data read/write apparatus 200 is initially set in the analog signal transmission/reception mode, the data read/write apparatus 200 can read out data from and write data on the magnetic disk of the diskette or the IC memory of the third diskette-type adapter 1C using the magnetic head 153.

According to the embodiment described above, the data read/write apparatus of the present invention is constructed by providing the FDD 100 with simple parts such as the flexible printed circuit 205, the connector 202 and the like. Further, these parts are arranged at the unused space in the FDD 100. Namely, by adding simple improvements to an existing FDD, it becomes possible to provide a data read/write apparatus in which each of a diskette and diskette-type adapters can be used.

Now, as was described with reference to Fig. 5, the data read/write apparatus 200 may be provided with a detection switch 203 for generating a discrimination signal which shows a type of a loaded diskette-type adapter. Further, the data read/write apparatus 200 may be configured to supply power and carry out switching operations to select an appropriate operation mode, in response to the discrimination signal outputted from the detection switch 203.

Next, a detailed description will be given for the detection switch 203.

As was described above, the detection switch 203 includes a switch formed with a protruding shape. Accordingly, for example, when the first diskette-type adapter 1A is loaded into the data read/write apparatus 200, the detection switch 203 enters the opening 3 (see Fig. 1) of the first diskette-type adapter 1A. Further, when the first diskette-type adapter 1A is loaded into the data read/write apparatus 200, the detection switch 203 outputs a discrimination signal in accordance with the depth of the opening 3 of the first diskette-type adapter 1A.

In this regard, it should be noted that diskettes and the prior art third diskette-type adapter 1C are not provided with openings like the opening 3 of the diskette-type adapter 1A. Accordingly, when a diskette or a prior art third diskette-type adapter 1C is loaded into the data read/write apparatus 200, the detection switch 203 is depressed with the under surface thereof by an amount that exceeds the predetermined amount. As a result, it becomes possible for the data read/write apparatus 200 to discriminate the diskette and the third diskette-type adapter 1C from the first and second diskette-type adapter 1A and 1B.

Next, the operations of the data read/write apparatus 200 will be described for the case where the second diskette-type adapter 1B shown in Figs. 6 - 8 is loaded into the data read/write apparatus 200.

As described above, the second diskette-type adapter 1B is equipped with the power supply terminals 45 and 46 for receiving power from the data read/write apparatus 200 and the discrimination signal terminal 47 for transmitting a discrimination signal to the data read/write apparatus 200, but no terminals for transmitting and receiving digital signals. Accordingly, the magnetic coil 14 is used for reading out data from and writing data in the IC memory 5 of the second diskette-type adapter 1B.

When the second diskette-type adapter 1B is loaded into the data read/write apparatus 200, the data read/write apparatus 200 supplies power to the second diskette-type adapter 1B via the terminals 245 and 246 and the terminals 45 and 46. Further, the second diskette-type adapter 1B transmits a discrimination signal indicating that the loaded object is the second diskette-type adapter 1B, to the data read/write apparatus 200 via the terminal 47 and the terminal 247. In this case, in response to the discrimination signal received from the second diskette-type adapter 1B, the data read/write apparatus 200 stays in the analog signal transmission/reception mode.

Further, in the same manner as was described for the case of the first diskette-type adapter 1A, the discrimination of the second diskette-type adapter 1B may be carried out by a detection switch 203 provided in the data read/write apparatus 200.

In such case, there is no need to provide the second diskette-type adapter 1B with means for outputting a discrimination signal. Namely, the terminal portion 4 of the diskette-type adapter 1B can be constructed from only the power supply terminals 45 and 46. Further, this makes it possible to construct the data read/write apparatus 200 so as to have a terminal portion 204 which is equipped with only the power supplying terminals 245 and 246 (see Fig. 6(B)).

Further, in order to discriminate the second diskette-type adapter 1B from the first diskette-type adapter 1A, the opening 3 of the second diskette-type adapter 1B is formed to have a different depth than the opening 3 of the first diskette-type adapter 1A.

In this connection, the detection switch 203 is designed to output two types of signals in accordance with the amount of depression of the detection switch 203. For example, when the detection switch 203 is depressed by the second diskette-type adapter 1B, the detection switch 203 outputs a signal in accordance with the depth of the opening 3 of the second diskette-type adapter 1B. In this way, the detection switch 203 outputs a signal indicating that the loaded object is the second diskette-type adapter 1B.

In response to this signal outputted from the detection switch 203, the data read/write apparatus 200 begins to supply power to the second diskette-type adapter 1B via the terminals 245 and 246 and the terminals 45 and 46. Further, in accordance with the signal outputted from the detection switch 203, the data read/write apparatus 200 stays in the analog signal transmission/reception mode.

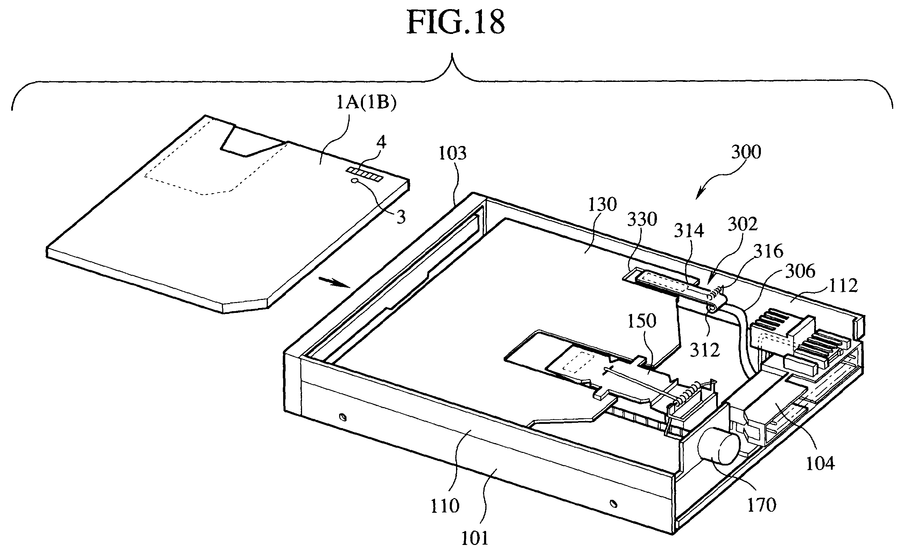

Next, a second embodiment of a data read/write apparatus according to the present invention will be described with reference to Figs. 18 - 20. In this regard, the elements of the second embodiment that are the same as those of the FDD 100 will be identified by the same reference numbers and characters.

Fig. 18 is a perspective view showing the second embodiment of the data read/write apparatus according to the present invention.

The data read/write apparatus 300 according to the present invention is constructed so as to make it possible to transmit and receive data between the data read/write apparatus 300 and the diskette-type adapter 1A (and 1B) shown in Fig. 18.

As shown in Fig. 18, the diskette-type adapter 1A is equipped with an opening 3 and a terminal portion 4 having a plurality of terminals. The terminals of the terminal portion 4 are arranged in a row along the front left side edge of the upper surface of the diskette-type adapter 1A. The opening 3 is used for recognition and positioning of the diskette-type adapter 1A when being loaded into the data read/write apparatus 300.

In the same manner as was described above for the first embodiment, the terminal portion 4 of the diskette-type adapter 1A is equipped with terminals 41 - 47. Among these seven terminals, terminals 41 - 44 are used to transmit and receive digital signals, terminals 45 and 46 are used to receive power supplied from the data read/write apparatus 300, and terminal 47 is used to transmit a discrimination signal to the data read/write apparatus 300. In this connection, the number and arrangement of the terminals of the diskette-type adapter 1A is not limited to this structure. For example, the number of terminals and the number of signal lines may be increased appropriately in accordance with factors such as the signal transfer rate.

The data read/write apparatus 300 is provided with a connector 302 to enable the transmission and reception of signals between the data read/write apparatus 300 and the diskette-type adapter 1A, and to enable the supply of power to the diskette-type adapter 1A from the data read/write apparatus 300.

The connector (connecting lever) 302 includes a structure which resembles the upper arm 152 of the carriage 150 of the FDD 100. Namely, the connector 302 is constructed to pivotally move in the up and down directions in accordance with the up and down movement of the disk holder 130. This structure makes it possible to establish electrical connection between the connector 302 and the terminal portion 4 of the diskette-type adapter 1A.

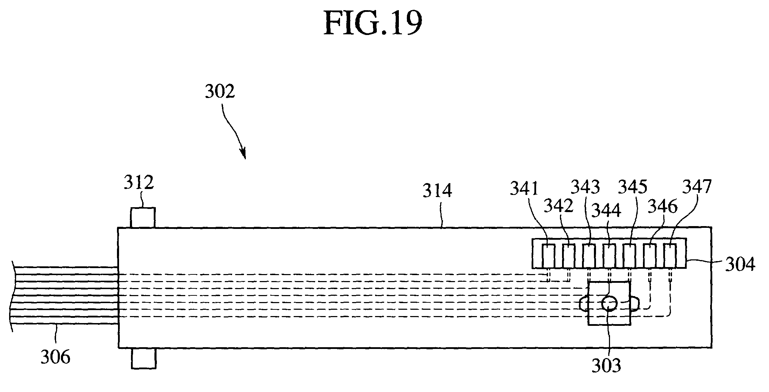

The connector 302 is provided with a terminal portion 304 (see Fig. 19). The terminal portion 304 is designed to establish an electrical connection with the terminal portion 4 of the diskette-type adapter 1A. This terminal portion 304 enables the transmission and reception of signals between the data read/write apparatus 300 and the diskette-type adapter 1A, and also enables the supply of power to the diskette-type adapter 1A from the data read/write apparatus 300.

In this connection, as shown in Fig. 18, a rectangular cut-away portion 330 is formed in the upper surface of the disk holder 130 of the data read/write apparatus 300 to expose therethrough the terminal portion 4 and the opening 3 of the diskette-type adapter 1A when it is loaded into the data read/write apparatus 300.

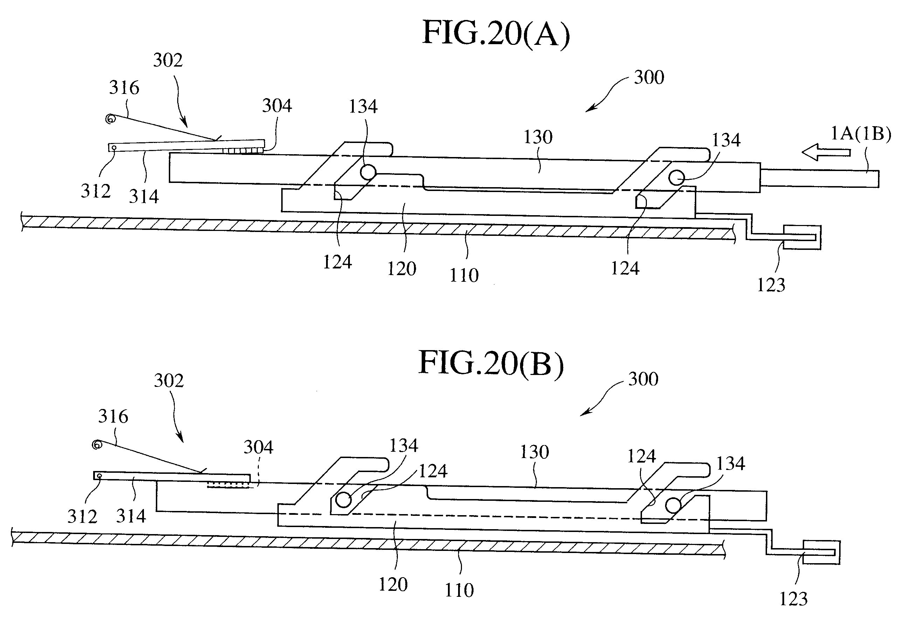

The connector 302 is mounted near the cut-away portion 330. Namely, the connector 302 is mounted on the inside surface of the side wall 112 positioned on the left side of the base frame 110. Further, the connector 302 is mounted in a cantilevered manner to enable the connector 302 to pivotally rotate in accordance with the up and down movement of the disk holder 130 (See Figs. 18 and 20).

In more detail, the connector 302 includes an axle 312 provided orthogonal to the side wall 112, an arm 314 which is pivotally supported by the axle 312 for free rotation therearound, a spring 316 for biasing the arm 314 toward the disk holder 130, and the terminal portion 304 which is provided so as to protrude downward from the lower surface of the tip portion of the arm 314. Further, a positioning protrusion 303 which is capable of insertion into the opening 3 of the diskette-type adapter 1A is provided at a position adjacent to the terminal portion 304. In this structure, the axle 312 of the connector 302 is provided at a slightly lower position than the upper surface of the disk holder 130 that is positioned at the raised position.

In the same manner as was described above for the first embodiment, the terminal portion 304 of the connector 302 includes terminals 341 - 347 which correspond to the terminals 41 - 47 of the diskette-type adapter 1A (See Fig. 19). The terminals 341 - 344 are used to transmit and receive digital signals, the terminals 345 and 346 are used to supply power, and the terminal 347 is used to receive a discrimination signal transmitted from the diskette-type adapter 1A.

When the diskette-type adapter 1A loaded in the disk holder 130 is lowered to the read/write position, the terminals 341 - 347 of the terminal portion 304 come into electrical contact with the terminals 41 - 47 of the diskette-type adapter 1A.

As shown in Figs. 18 and 19, the terminals 341 - 347 are connected to a flexible printed circuit 306. This flexible printed circuit 306 is electrically connected to the circuit board 102 of the data read/write apparatus (FDD) 300.

When the disk holder 130 is positioned at the raised position, the arm 314 of the connector 302 is put against the rear edge of the disk holder 130. In this state, the terminal portion 304 of the connector 302 is removed from the terminal portion 4 of the diskette-type adapter 1A (See Fig. 20(A)).

When the disk holder 130 begins to be displaced to the lowered position, the arm 314 also begins to be displaced downward at the same time by the biasing force of the spring 316. In this way, the terminal portion 304 of the connector 302 comes into electrical contact with the terminal portion 4 of the diskette-type adapter 1A (See Fig. 20(B)).

Preferably, the spring 316 of the connector 302 has biasing force enough to establish a good electrical connection between the terminal portion 304 of the connector 302 and the terminal portion 4 of the diskette-type adapter 1A. In other words, the biasing force of the spring 316 of the connector 302 is adjusted so as not to push the diskette-type adapter 1A over the extent necessary for the good electrical connection.

Further, the height of the terminals 341 - 347 of the connector 302 should preferably undergo an appropriate adjustment so as to provide a good electrical connection, when the terminals 341 - 347 of the connector 302 comes into contact with the terminals 41 - 47 of the diskette-type adapter 1A. Namely, the terminals 341 - 347 should be adjusted to an appropriate height for establishing a good electrical connection with the terminals 41 - 44 of the diskette-type adapter 1A. In this way, the transmission and reception of data between the data read/write apparatus 300 and the diskette-type adapter 1A can be carried out more reliably.

Further, the cut-away portion 330 may be formed to have a rough U-shape like the U-shaped opening portion 131a of the FDD 100 described above. In this case, the arm 314 may have engagement members to establish engagement with the edge of the upper surface of the disk holder 130 which defines such a roughly U-shaped cut-away portion.

Next, with reference to Fig. 20, a description will be given for the operation of the data read/write apparatus 300 equipped with the connector lever 302.

Fig. 20(A) shows a state in which the disk holder 130 is positioned in the eject position (raised position). In this state, the arm 314 of the connector 302 is put against the rear edge of the disk holder 130. Further, in this state, the terminal portion 304 of the connector 302 is positioned above the top plate portion 131 of the disk holder 130.

Then, when the diskette-type adapter 1A is loaded into the diskholder 130, the lock lever 140 is rotated, whereby the engagement between the eject plate 120 and the engagement portion 143 of the lock lever 140 is released. As a result, in accordance with the movement of the eject plate 120 toward the front position, the disk holder 130 is displaced downward along the cam grooves 124 of the eject plate 120 (See Fig. 20(B)).

Now, as was described above, the arm 314 of the connector 302 is displaced downward in accordance with the downward movement of the disk holder 130. Namely, in accordance with the downward movement of the disk holder 130, the arm 314 of the connector 302 pivotally rotates around the axle 312 in the clockwise direction in Fig. 20(A). In this way, the terminal portion 304 of the arm 314 comes into electrical contact with the terminal portion 4 of the diskette-type adapter 1A.

When an electrical connection is established between the terminal portion 304 of the arm 314 and the terminal portion 4 of the diskette-type adapter 1A, the data read/write apparatus 300 begins to supply power to the diskette-type adapter 1A.

Further, based on the discrimination signal received from the diskette-type adapter 1A, the data read/write apparatus 300 recognizes that the loaded object is the diskette-type adapter 1A.

Furthermore, in response to the received discrimination signal, the switching circuit 250 of the data read/write apparatus 300 switches the operation mode from the analog signal transmission/reception mode to the digital signal transmission/reception mode. In this way, it becomes possible for the data read/write apparatus 300 to read out data from and write data in the IC memory of the diskette-type adapter 1A.

Next, when the diskette-type adapter 1A is to be ejected, the eject button 123 is depressed in the same manner as was described above for the case of a 3.5 inch FD. This operation makes the eject plate 120 slide toward the rear, whereby the disk holder 130 moves from the lowered position to the raised position along the cam grooves 124 of the eject plate 120.

In accordance with the movement of the disk holder 130, the arm 314 of the connector 302 is pushed up by the disk holder 130, and this forces the arm 314 to rotate around the axle 312. In this way, the tip portion of the arm 314 is removed from the upper surface of the diskette-type adapter 1A. As a result, the electrical connection between the diskette-type adapter 1A and the data read/write apparatus 300 is broken.

According to the embodiment described above, the data read/write apparatus of the present invention is constructed by providing the FDD 100 with simple parts such as the connector 302 and the like and by forming the cut-away portion 330 in the upper surface of the disk holder 130. Further, the simple parts are arranged at the unused space in the FDD 100. Namely, by adding simple improvements to an existing FDD, it becomes possible to provide a data read/write apparatus in which each of diskettes and diskette-type adapters 1A, 1B and 1C can be used.

Further, when a 3.5 inch diskette or the prior art diskette-type adapter 1C is inserted into the disk holder 130, the protrusion 303 of the connector 302 makes contact with the outer case of the inserted 3.5 inch diskette or diskette-type adapter 1C. In this way, it is possible to prevent the terminal portion 304 of the connector 302 from being damaged.

Further, even in the case where a 3.5 inch diskette or prior art diskette-type adapter 1C is loaded into the data read/write apparatus 300, the data read/write apparatus 300 does not detect (receive) a discrimination signal. Therefore, the data read/write apparatus 300 stays in the analog signal transmission/reception mode.

Furthermore, when the second diskette-type adapter 1B (See Figs. 6 - 9) is loaded into the disk holder 130, the data read/write apparatus 300 supplies power to the second diskette-type adapter 1B via the terminals 345 and 346 and the terminals 45 and 46 in the same manner as described above for the first embodiment. Further, in response to the discrimination signal received from the second diskette-type adapter 1B, the data read/write apparatus 300 stays in the analog signal transmission/reception mode.

In this second embodiment, the protrusion 303 of the connector 302 may be constructed as a push-button type detection switch 303. In this case, it becomes possible for the data read/write apparatus 300 to discriminate the type of the loaded object and perform switching operations to switch the operation mode in response to the discrimination signal outputted from the detection switch 303 in the same manner as was described above for the case of the first embodiment.

Finally, it should be noted that the data read/write apparatus according to the present invention is not limited to the embodiments described above, and it is possible to make various modifications and changes therein. For example, the mounting position and structure of the connector 202 and 302 are not limited to the embodiments described above. Namely, so long as power can be supplied and data can be transmitted and received, the connecting devices (connectors) 202 and 302 may have any appropriate structure and mounting position.

Further, the terminal portion of the diskette-type adapter may be provided, for example, on the front-end surface of the outer casing of the diskette-type adapter. In this case, the data read/write apparatus is constructed to be capable of establishing an electrical connection with such diskette-type adapter.

Furthermore, the terminal portion of the diskette-type adapter may be provided, for example, on a side end surface of the outer casing. In this case, the data read/write apparatus is constructed so as to be capable of establishing an electrical connection with such diskette-type adapter.

Now, as described above, the data read/write apparatus according to the present invention is equipped with a digital signal transmission/reception means. Therefore, in the case where a diskette-type adapter which includes a digital signal transmission/reception means is loaded into the data read/write apparatus according to the present invention, it becomes possible to transmit and receive digital signals between the data read/write apparatus and the diskette-type adapter.

Further, the data read/write apparatus according to the present invention is also equipped with an analog signal transmission/reception means. Therefore, in the case where a diskette is loaded, the data read/write apparatus can read out data from and write data on the magnetic disk of the diskette. Furthermore, in the case where a diskette-type adapter which includes an analog signal transmission/reception means is loaded into the data read/write apparatus according to the present invention, it becomes possible to transmit and receive analog signals between the data read/write apparatus and the diskette-type adapter.

Moreover, the data read/write apparatus according to the present invention is equipped with a power supplying means for supplying power to the diskette-type adapter. Therefore, in the case where a diskette-type adapter which includes a power receiving portion is loaded into the data read/write apparatus according to the present invention, it becomes possible for the data read/write apparatus to supply power to the diskette-type adapter.

Furthermore, according to the present invention, a data read/write apparatus which can use both diskettes and diskette-type adapters is constructed by adding simple modifications to an existing FDD. Namely, the present invention makes it possible to construct such a read/write apparatus at a low cost.

## Claims

1. A data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having digital signal transmission and reception means and/or analog signal transmission and reception means and having a power reception portion through which power is supplied from the data read/write apparatus, the apparatus comprising:
digital signal transmission and reception means for transmitting and receiving a digital signal to and from the digital signal transmission and reception means of the diskette-type adapter when the diskette-type adapter having the digital signal transmission and reception means is loaded in the data read/write apparatus;
analog signal transmission and reception means for reading out data from and writing data on the magnetic disk of the diskette when the diskette is loaded in the data read/write apparatus, and for transmitting and receiving an analog signal to and from the analog signal transmission and reception means of the diskette-type adapter when the diskette-type adapter having only the analog signal transmission and reception means is loaded in the data read/write apparatus; and
power supply means for supplying the power to the diskette-type adapter through the power reception portion of the diskette-type adapter when the diskette-type adapter having the power reception portion is loaded in the data read/write apparatus.

2. The data read/write apparatus as claimed in Claim 1, further comprising discrimination means for discriminating a loaded object as the diskette-type adapter when it is loaded in the data read/write apparatus.

3. The data read/write apparatus as claimed in Claim 2, wherein the discrimination means discriminates that either of the digital signal transmission and reception means or the analog signal transmission and reception means is provided in the loaded diskette-type adapter.

4. The data read/write apparatus as claimed in Claim 3, wherein the diskette-type adapter is configured to transmit discrimination information to the data read/write apparatus when it is loaded in the data read/write apparatus, in which the discrimination by the discrimination means is made based on the discrimination information transmitted from the diskette-type adapter.

5. The data read/write apparatus as claimed in Claim 3, further comprising a switching mechanism being configured to generate discrimination information when the diskette-type adapter is loaded in the data read/write apparatus, wherein the discrimination by the discrimination means is made based on the discrimination information generated by the switching mechanism.

6. The data read/write apparatus as claimed in Claim 3, further comprising switching means for switching an operation mode of the apparatus between a first mode where the analog signal transmission and reception means can be operated and a second mode where the digital signal transmission and reception means can be operated, in response to the discrimination result by the discrimination means.

7. The data read/write apparatus as claimed in Claim 6, wherein the switching means switches the operation mode of the apparatus from the first mode to the second mode when the discrimination means discriminates a loaded object as the diskette-type adapter having the digital signal transmission and reception means.

8. A data read/write apparatus in which at least one of a first diskette-type device, a second diskette-type device and a third diskette-type is adapted to be selectively used, wherein the first diskette-type device including a magnetic disk therein as a data storage, the second diskette-type device being equipped with a built-in IC memory as a data storage or used with an IC memory as a data storage which is adapted to be removably inserted thereinto, and the second diskette-type device having digital signal transmission and reception means and having a power reception portion through which power is supplied from the data read/write apparatus, and the third diskette-type device being equipped with a built-in IC memory as a data storage or used with an IC memory as a data storage which is adapted to be removably inserted thereinto, and the third diskette-type device having analog signal transmission and reception means and having a power reception portion through which power is supplied from the data read/write apparatus, the apparatus comprising:
digital signal transmission and reception means for transmitting and receiving a digital signal to and from the digital signal transmission and reception means of the second diskette-type device when the second diskette-type device is loaded in the data read/write apparatus;
analog signal transmission and reception means for reading out data from and writing data on the magnetic disk of the first diskette-type device when the first diskette-type device is loaded in the data read/write apparatus, and for transmitting and receiving an analog signal to and from the analog signal transmission and reception means of the third diskette-type device when the third diskette-type device is loaded in the data read/write apparatus; and
power supply means for supplying the power to the second or third diskette-type device through the power reception portion of the diskette-type device when either one of the second and third diskette-type device is loaded in the data read/write apparatus.

9. The data read/write apparatus as claimed in Claim 8, further comprising discrimination means for discriminating a loaded device between the second diskette-type device and the third diskette-type device when either one of the second or third diskette-type device is loaded.

10. A data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having a power reception portion through which power is supplied from the data read/write apparatus, the apparatus comprising:
discrimination means for discriminating a loaded object as the diskette-type adapter when it is loaded in the data read/write apparatus; and
power supply means for supplying the power to the diskette-type adapter through the power reception portion of the diskette-type adapter when the discrimination means discriminates the loaded object as the diskette-type adapter.

11. The data read/write apparatus as claimed in Claim 10, further comprising a holder which is displaceable between an eject position and a read and write position, wherein the power supply means supplies the power to the diskette-type adapter through the power reception portion of the diskette-type adapter when the holder into which the diskette-type adapter is inserted is displaced to the read and write position from the eject position.

12. The data read/write apparatus as claimed in Claim 11, wherein the diskette-type adapter has a lower surface and the power reception portion is arranged on the lower surface of the diskette-type adapter, in which the power supply means is arranged below the holder and comes into electrical contact with the power reception portion of the diskette-type adapter when the holder into which the diskette-type adapter is inserted is displaced to the read and write position from the eject position.

13. The data read/write apparatus as claimed in Claim 11, wherein the diskette-type adapter has an upper surface and the power reception portion is arranged on the upper surface of the diskette-type adapter, in which the power supply means is displaceable between a connected position where the power supply means comes into electrical contact with the power reception portion and an unconnected position where the power supply means is separated from the power reception portion in accordance with the displacement of the holder between the read and write position and the eject position.

14. The data read/write apparatus as claimed in Claim 13, wherein the holder is formed to expose the power reception portion of the diskette-type adapter when it is inserted into the holder, and the power supply means supplies the power to the diskette-type adapter through the exposed power reception portion when the holder into which the diskette-type adapter is inserted is displaced to the read and write position from the eject position.

15. A data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having a power reception portion through which power is supplied from the data read/write apparatus, the apparatus comprising:
a holder which is configured to be able to hold each of the diskette and the diskette-type adapter, the holder being displaceable between an eject position and a read and write position; and
power supply means for supplying the power to the diskette-type adapter through the power reception portion of the diskette-type adapter when the diskette-type adapter is inserted into the holder, the power supply means being provided in the holder.

16. A data read/write apparatus in which at least one of a diskette and a diskette-type adapter is adapted to be selectively used, wherein the diskette including a magnetic disk therein as a data storage, and the diskette-type adapter being equipped with a built-in IC memory as a data storage or used with an IC memory as a data storage which is adapted to be removably inserted thereinto, and the diskette-type adapter having a power reception portion through which power is supplied from the data read/write apparatus, the apparatus comprising:
a holder which is configured to be able to hold each of the diskette and the diskette-type adapter, the holder being displaceable between an eject position and a read and write position; and
power supply means for supplying the power to the diskette-type adapter through the power reception portion of the diskette-type adapter when the diskette-type adapter is inserted into the holder, wherein the power supply means supplies the power to the diskette-type adapter when the holder into which the diskette-type adapter is inserted is displaced to the read and write position from the eject position.
